# EUROPEAN PATENT APPLICATION

(11) **EP 2 975 404 A1**
(43) Date of publication of application: **20.01.2016**
(21) Application number: 14764358.9
(22) Date of filing: 14.03.2014
(51) Int. Cl.: G01N 33/53, G01N 35/02, G01N 37/00

(54) **BIOCHIP FIXING METHOD, BIOCHIP FIXING DEVICE, AND SCREENING METHOD FOR BIOMOLECULE ARRAY**

(30) Priority: 15.03.2013 JP 2013053319; 14.05.2013 JP 2013102338
(71) Applicant: Nikon Corporation, Tokyo 108-6290 (JP)
(72) Inventor: UEDA, Takehiko, Tokyo 100-8331 (JP); HAYASHI, Yutaka, Tokyo 100-8331 (JP); ISAMI, Tadao, Tokyo 100-8331 (JP); HAMASHIMA, Muneki, Tokyo 100-8331 (JP)
(74) Representative: Hoffmann Eitle
(86) International application number: PCT/JP2014/057007
(87) International publication number: WO 2014/142330

(57) **Abstract**

A biochip fixing method includes: arranging a biochip on an object with a predetermined material interposed therebetween; and irradiating the predetermined material with energy waves via the object to fix the biochip to the object.

## Description

### TECHNICAL FIELD

The present invention relates to a biochip fixing method, a biochip fixing device, and a biomolecule array screening method.

Priority is claimed on Japanese Patent Application No. 2013-053319, filed March 15,2013, and Japanese Patent Application No. 2013-102338, field May 14,2013, the contents of which are incorporated herein by reference.

### BACKGROUND

For example, as a technique of measuring biomolecules, a method of causing biomolecules to react with samples using a biomolecule array (so-called biochip) in which biomolecules are arranged in a plurality of areas on a substrate and measuring the biomolecules after reaction in a fluorometric manner is known (for example, see Patent Document 1). In this configuration, methods of fixing a biochip to a base member such as a plate and moving the biochip using the base member when an operation of dispensing a plurality of samples or an operation of measuring a plurality of biomolecules after reaction with the samples is performed are being investigated. As a method of fixing a chip member to a base member, for example, Patent Document 2 discloses a technique of transferring an adhesive to a bonding position of a circuit board and carrying and mounting a semiconductor chip onto the bonding position to which the adhesive has been transferred.

### [Related Art Documents]

### [Patent Document]

[Patent Document 1]
   Published Japanese Translation of PCT Application No. 2005-513457
[Patent Document 2]
   Japanese Patent Application, Publication No. 2002-28568

### SUMMARY OF INVENTION

### TECHNICAL PROBLEM

However, for example, in the above-mentioned related art, when an operation of dispensing a plurality of samples or an operation of measuring a plurality of biomolecules after reaction with the samples is performed, it is necessary to handle the plate on which the biochips having biomolecules are arranged as a whole with high accuracy. Accordingly, it is necessary to fix biochips to a plate (measurement target) or cut a substrate for partitioning into biochips with high accuracy.

When a substrate on which biomolecules are arranged is bonded to a base member with an adhesive, misalignment or deformation of the substrate occurs during hardening of the adhesive and thus there is a possibility of the substrate not being fixed to the base member with high accuracy.

A purpose of aspects of the present invention is to provide a technique by which each measurement target can be handled with high accuracy.

Another purpose of aspects of the present invention is to provide a technique by which a substrate having biomolecules arranged thereon can be fixed to a base member with high accuracy.

### MEANS FOR SOLVING THE PROBLEM

According to an aspect of the present invention, there is provided a biochip fixing method including: arranging a biochip on an object with a predetermined material interposed therebetween; and irradiating the predetermined material with energy waves via the object to fix the biochip to the object.

According to another aspect of the present invention, there is provided a biochip fixing device including: an irradiation unit that irradiates a predetermined material, which is arranged between a biochip and an object, with energy waves via the object.

According to still another aspect of the present invention, there is provided a substrate fixing method including: a cutting step of cutting a stacked body including a substrate having a first surface and a second surface, a plurality of biomolecules arranged on the first surface, and an adhesive layer arranged on the second surface in a state in which the adhesive layer is interposed between the substrate and a support member; a removing step of removing the support member from the stacked body; and a fixing step of bonding the adhesive layer of the stacked body to an object.

According to still another aspect of the present invention, there is provided a substrate fixing method including: a cutting step of cutting a stacked body including a substrate having a first surface and a second surface and a plurality of biomolecules arranged on the first surface in a state in which a support member is brought into contact with the second surface of the stacked body to support the stacked body; a removing step of removing the support member from the stacked body; and a fixing step of bonding the second surface of the substrate of the stacked body to an object, wherein the object includes a groove portion in a bonding area to which the second surface is bonded and wherein the fixing step includes dispensing a material, which is hardened by performing a predetermined process, to the groove portion to be coplanar with the surface of the object, bringing the second surface into contact with the bonding area in a state in which the material is dispensed, and fixing the second surface to the object by performing the predetermined process on the material to harden the material in a state in which the second surface is brought into contact with the bonding area.

According to still another aspect of the present invention, there is provided a substrate cutting method including: a first step of forming sections including a plurality of biomolecules on a first surface of a substrate having the first surface and a second surface; a second step of bonding an adhesive layer having an adhesivity on at least a surface bonded to the second surface to the second surface of the substrate to form a stacked body; a third step of arranging a support member on the adhesive layer of the stacked body or arranging the support member on the first surface including the plurality of biomolecules; and a fourth step of cutting the stacked body by the sections.

According to another aspect of the present invention, there is provided a biomolecule array screening method including: the substrate fixing method according to the first or second aspect; a dispensing step of dispensing a sample including a target, which is able to specifically react with biomolecules, to the object; and a detection step of detecting an affinity of the target and the biomolecules.

According to still another aspect of the present invention, there is provided a substrate fixing device that fixes a biochip having a first surface on which a plurality of biomolecules are arranged to a support area of a base member, including: a supply unit that supplies a photocurable adhesive to the biochip or the support area; a transfer unit that arranges the biochip in the support area; a stage that includes a transmissive area transmitting light for hardening the photocurable adhesive to correspond to at least a part of an arrangement surface on which the base member is arranged and that is able to support the base member; and an irradiation unit that irradiates at least a part of the arrangement surface with light.

According to still another aspect of the present invention, there is provided a substrate fixing device that fixes a biochip having a first surface on which a plurality of biomolecules are formed to a support area of a base member, including: a supply unit that supplies a photocurable adhesive to the biochip or the support area; a transfer unit that arranges the biochip in the support area; a stage that includes a transmissive area transmitting light for hardening the photocurable adhesive and that is able to support the base member; and an irradiation unit that irradiates the transmissive area of the stage with light.

According to still another aspect of the present invention, there is provided a mounting device including: the substrate fixing device according to the first aspect; and a feed device that feeds a biochip to the substrate fixing device.

According to still another aspect of the present invention, there is provided a substrate fixing method of fixing a biochip, which has a first surface and a second surface and in which a plurality of biomolecules are arranged on the first surface, to a support area of a base member, including: a supply step of supplying an adhesive, which is hardened by irradiation with light, to the second surface of the biochip or the support area; a transfer step of arranging the biochip in the support area to bring the support area and the second surface into contact with each other with the adhesive interposed therebetween; and an irradiation step of irradiating the second surface of the biochip arranged in the support area with light.

According to still another aspect of the present invention, there is provided a mounting method including: a substrate feeding step of feeding a biochip having a first surface on which a plurality of biomolecules are arranged and a step of fixing the fed biochip to a base member using the substrate fixing method according to the fourth aspect of the present invention.

According to still another aspect of the present invention, there is provided a biochip-mounted base member manufacturing method including: the substrate fixing method according to the fourth aspect of the present invention; and a sealing step of sealing a base member to which a biochip is bonded using the substrate fixing method.

### ADVANTAGE OF THE INVENTION

According to the aspects of the present invention, it is possible to handle each measurement target with high accuracy.

According to the aspects of the present invention, it is possible to fix a substrate having biomolecules arranged thereon to a base member.

### BRIEF DESCRIPTION OF THE DRAWINGS

Fig. 1 is a cross-sectional view illustrating a configuration of a support device according to a first embodiment.
Fig. 2 is a diagram illustrating a process of a substrate fixing method and a substrate cutting method according to the first embodiment.
Fig. 3A is a diagram illustrating a process of the substrate fixing method and the substrate cutting method according to the first embodiment.
Fig. 3B is a diagram illustrating a process of the substrate fixing method and the substrate cutting method according to the first embodiment.
Fig. 3C is a diagram illustrating a process of the substrate fixing method and the substrate cutting method according to the first embodiment.
Fig. 3D is a diagram illustrating a process of the substrate fixing method and the substrate cutting method according to the first embodiment.
Fig. 3E is a diagram illustrating a process of the substrate fixing method and the substrate cutting method according to the first embodiment.
Fig. 3F is a diagram illustrating a process of the substrate fixing method and the substrate cutting method according to the first embodiment.
Fig. 3G is a diagram illustrating a process of the substrate fixing method and the substrate cutting method according to the first embodiment.
Fig. 3H is a diagram illustrating a process of the substrate fixing method and the substrate cutting method according to the first embodiment.
Fig. 4 is a cross-sectional view illustrating a configuration of a support device according to a second embodiment.
Fig. 5 is a diagram illustrating a process of a substrate fixing method and a substrate cutting method according to the second embodiment.
Fig. 6 is a cross-sectional view illustrating a configuration of a support device according to a third embodiment.
Fig. 7 is a diagram illustrating a process of a substrate fixing method and a substrate cutting method according to the third embodiment.
Fig. 8 is a diagram illustrating a process of a substrate fixing method and a substrate cutting method according to a modification example.
Fig. 9 is a diagram illustrating a process of the substrate fixing method and the substrate cutting method according to the modification example.
Fig. 10 is a diagram illustrating a process of the substrate fixing method and the substrate cutting method according to the modification example.
Fig. 11 is a diagram illustrating a process of the substrate fixing method and the substrate cutting method according to the modification example.
Fig. 12 is a diagram illustrating a configuration of a support device according to a modification example.
Fig. 13 is a diagram illustrating a configuration of a support device according to a modification example.
Fig. 14 is a diagram illustrating a process of a substrate fixing method and a substrate cutting method according to a modification example.
Fig. 15 is a plan view schematically illustrating a configuration of a mounting device according to a fourth embodiment.
Fig. 16 is a plan view of a transfer unit according to the fourth embodiment.
Fig. 17 is a cross-sectional view of the transfer unit according to the fourth embodiment.
Fig. 18 is a cross-sectional view taken along line A-A in Fig. 15.
Fig. 19 is a cross-sectional view taken along line B-B in Fig. 15.
Fig. 20 is a diagram illustrating a silicon wafer according to the fourth embodiment.
Fig. 21 is a diagram illustrating a dicing step according to the fourth embodiment.
Fig. 22 is a diagram schematically illustrating a configuration of the mounting device according to the fourth embodiment.
Fig. 23 is a diagram schematically illustrating a configuration of a mounting device according to a fifth embodiment.
Fig. 24 is a diagram schematically illustrating a configuration of a screening device including the mounting device according to the embodiment.
Fig. 25 is a cross-sectional view of an inspection package which is used in the screening device according to the embodiment.
Fig. 26 is a cross-sectional view of a dispensing device which is used in the screening device according to the embodiment.
Fig. 27 is a cross-sectional view of a measuring device which is used in the screening device according to the embodiment.
Fig. 28 is a perspective view illustrating an appearance of a capsule which is used in an example of the screening device.
Fig. 29 is a cross-sectional view of a carrier which is used in an example of the screening device.
Fig. 30 is a perspective view illustrating an appearance of a cube which is used in an example of the screening device.
Fig. 31 is a cross-sectional view of a dispensing device which is used in an example of the screening device.
Fig. 32 is a cross-sectional view of a carrier which is used in an example of the screening device.
Fig. 33 is a plan view of a transfer unit according to another embodiment.
Fig. 34 is a cross-sectional view of the transfer unit.
Fig. 35 is an enlarged view of an alignment pin and a first hole.
Fig. 36 is a plan view of a top face on which a mark is formed.
Fig. 37A is a diagram schematically illustrating an example of a chip mounting structure.
Fig. 37B is a diagram schematically illustrating an example of a chip mounting structure.
Fig. 37C is a diagram schematically illustrating an example of a chip mounting structure.
Fig. 37D is a diagram schematically illustrating an example of a chip mounting structure.
Fig. 38 is a diagram schematically illustrating an example of a procedure of detecting a position/posture of a biochip.
Fig. 39 is a diagram schematically illustrating another example of the procedure of detecting a position/posture of a biochip.
Fig. 40 is a diagram schematically illustrating an example of a method of fixing a biochip using ultrasonic waves.

### DESCRIPTION OF EMBODIMENTS

Hereinafter, embodiments of the present invention will be described with reference to the accompanying drawings. The following embodiments are not restrictive. The drawings illustrate general aspects of configurations and are not based on the same scales. It will be understood that the present invention is not limited to the specific embodiments illustrated and described in the drawings and the description, which are only examples and inform those skilled in the art how to make and/or use the invention described in the claims. An embodiment can be combined with one or more other embodiments at least partially. Some elements may be omitted. Although some operations in the disclosed methods are described in a specific continuous sequence for the purpose of convenience of expression, it should be understood that the method can be rearranged as long as no specific order is specifically defined. For example, operations which are described as continuous may be rearranged or simultaneously performed in some cases.

### (First embodiment)

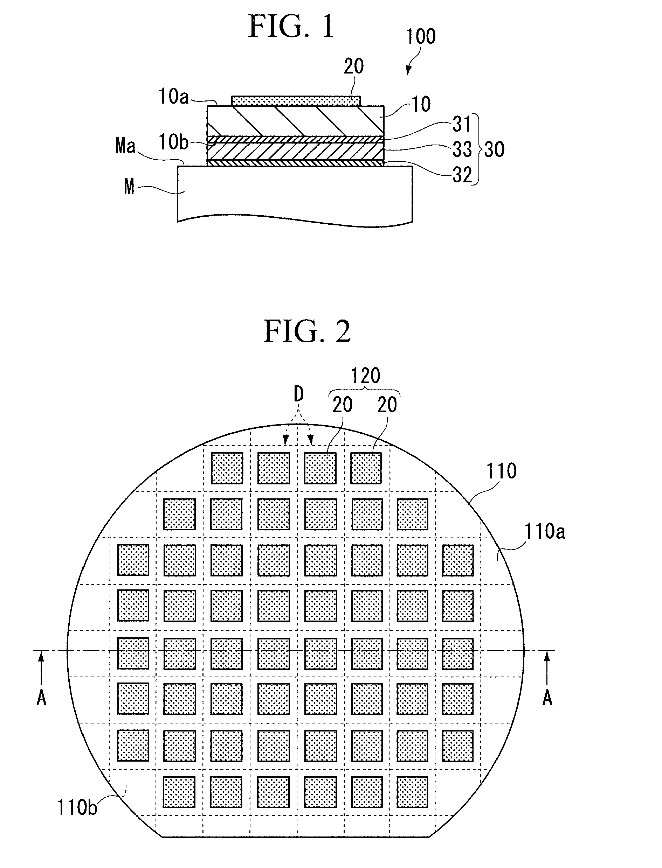

Fig. 1 is a cross-sectional view illustrating a configuration of a substrate fixing structure 100 according to this embodiment.

As illustrated in Fig. 1, the substrate fixing structure 100 includes a support device (object) M, a chip (substrate) 10, a biomolecule portion (a plurality of biomolecules) 20, and an adhesive portion (adhesive layer) 30. The substrate fixing structure 100 has a configuration in which a biochip (biomolecule array) having the biomolecule portion 20 on the chip 10 is fixed to the support device M by the adhesive portion 30.

The chip 10 is a rectangular substrate which is formed of, for example, silicon. The chip 10 has a first surface 10a which is a substrate surface and a second surface 10b which is a substrate surface opposite to the first surface 10a. The first surface 10a and the second surface 10b are formed, for example, in a flat planar shape. The first surface 10a and the second surface 10b are formed, for example, in parallel to each other.

The biomolecule portion 20 is arranged on the first surface 10a of the chip 10. For example, the biomolecule portion 20 includes a plurality of biomolecules that specifically react with a target which is included in a sample and which is fluorescently labeled to be combined with the target and that generate predetermined fluorescent light when irradiated with predetermined light (excitation light). The plurality of biomolecules are biomolecules which are, for example, basic materials constituting a biological body and are arranged in a plurality of areas (spots) in the biomolecule portion 20.

The adhesive portion 30 bonds the chip 10 and the support device M to each other. The adhesive portion (adhesive layer) 30 includes a first adhesive material (first adhesive layer) 31, a second adhesive material (second adhesive layer) 32, and a support base (support substrate) 33. The first adhesive material 31 is bonded to the second surface 10b of the chip 10. The second adhesive material 32 is bonded to the support device M. The support base 33 is interposed between the first adhesive material 31 and the second adhesive material 32 and supports the first adhesive material 31 and the second adhesive material 32. The adhesive portion 30 has adhesiveness on both surfaces thereof due to the first adhesive material 31 and the second adhesive material 32.

The support device M has a support surface Ma on which the chip 10 is fixed. The second adhesive material 32 of the adhesive portion 30 is bonded to the support surface Ma. The support surface Ma is formed, for example, in a flat shape. The support device M is formed of, for example, quartz or resin materials. The support device M has a configuration suitable for continuously (or consistently) performing dispensation and measurement of samples (for example, whole blood or blood serum).

A method (a substrate fixing method and a substrate cutting method) of manufacturing the substrate fixing structure 100 having the above-mentioned configuration will be described below.

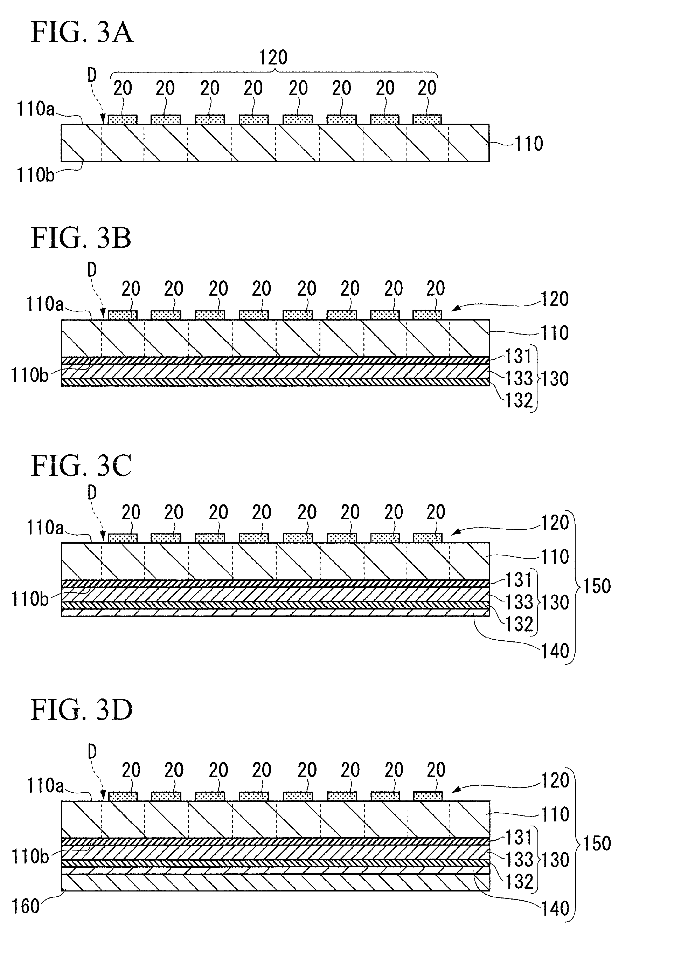

Fig. 2 is a diagram illustrating a process in manufacturing the substrate fixing structure 100. Figs. 3A to 3H are diagrams illustrating the procedure of manufacturing the substrate fixing structure 100. Figs. 3A to 3H illustrate a cross-sectional configuration taken along line A-A in Fig. 2.

As illustrated in Fig. 2, a silicon wafer (substrate) 110 is used to manufacture the substrate fixing structure 100. The silicon wafer 110 has a first surface 110a which is a substrate surface and a second surface 110b which is a substrate surface opposite to the first surface 110a. First, a plurality of biomolecules are patterned in sections which are partitioned in a matrix shape on the first surface 110a of the silicon wafer 110. Accordingly, sections D including a plurality of biomolecules are formed (first step).

For example, in this patterning, a step of arranging a predetermined biomolecule forming material on the silicon wafer 110 and a step of selectively irradiating the biomolecule forming material with light of a predetermined wavelength via a mask are repeated multiple times. Accordingly, as illustrated in Figs. 2 and 3A, the biomolecule portion 20 in a state in which a plurality of biomolecules are stacked in a plurality of areas (spots) is formed in each section D (biomolecule portion pattern 120).

After the biomolecule portion pattern 120 is formed on the first surface 110a of the silicon wafer 110, an adhesive sheet (an adhesive portion, an adhesive layer) 130 is bonded to the second surface 110b of the silicon wafer 110 as illustrated in Fig. 3B. The size, shape, or the like of the adhesive sheet 130 is designed to cover at least the sections D in which the biomolecule portion pattern 120 is formed in the silicon wafer 110.

The adhesive sheet 130 includes a first adhesive layer 131, a second adhesive layer 132, and a support film (support substrate) 133. The first adhesive layer 131 is bonded to the second surface 110b of the silicon wafer 110. The second adhesive layer 132 is disposed to be bonded externally. The support film 133 is interposed between the first adhesive layer 131 and the second adhesive layer 132 and supports the first adhesive layer 131 and the second adhesive layer 132. The support film 133 is formed of, for example, a material such as cellophane. Accordingly, the adhesive sheet 130 can be bonded on both surfaces of the first adhesive layer 131 and the second adhesive layer 132.

After the adhesive sheet 130 is bonded to the second surface 110b of the silicon wafer 110, a protective sheet (protective layer) 140 is bonded to the surface of the second adhesive layer 132 as illustrated in Fig. 3C. The adhesive sheet 130 to which the protective sheet 140 is bonded in advance may be bonded to the second surface 110b of the silicon wafer 110. The protective sheet 140 is bonded to the second adhesive layer 132 to be peeled off after the attachment. By attaching the protective sheet 140, a stacked body 150 including the silicon wafer 110, the biomolecule portion pattern 120, the adhesive sheet 130, and the protective sheet 140 is formed (second step). Since the strength of the stacked body 150 can be enhanced by attaching the protective sheet 140, for example, deformation of the stacked body 150 at the time of cutting is reduced. When the protective sheet 140 need not be bonded due to the strength of the stacked body 150, the second step may be skipped.

After the protective sheet 140 is bonded, a dicing tape (support member) 160 is bonded to the surface of the protective sheet 140 (preparation step, third step) as illustrated in Fig. 3D. The dicing tape 160 is disposed to interpose the adhesive sheet 130 between the silicon wafer 110 and the dicing tape 160. The silicon wafer 110 is supported by the dicing tape 160 with the adhesive sheet 130 and the protective sheet 140 interposed therebetween.

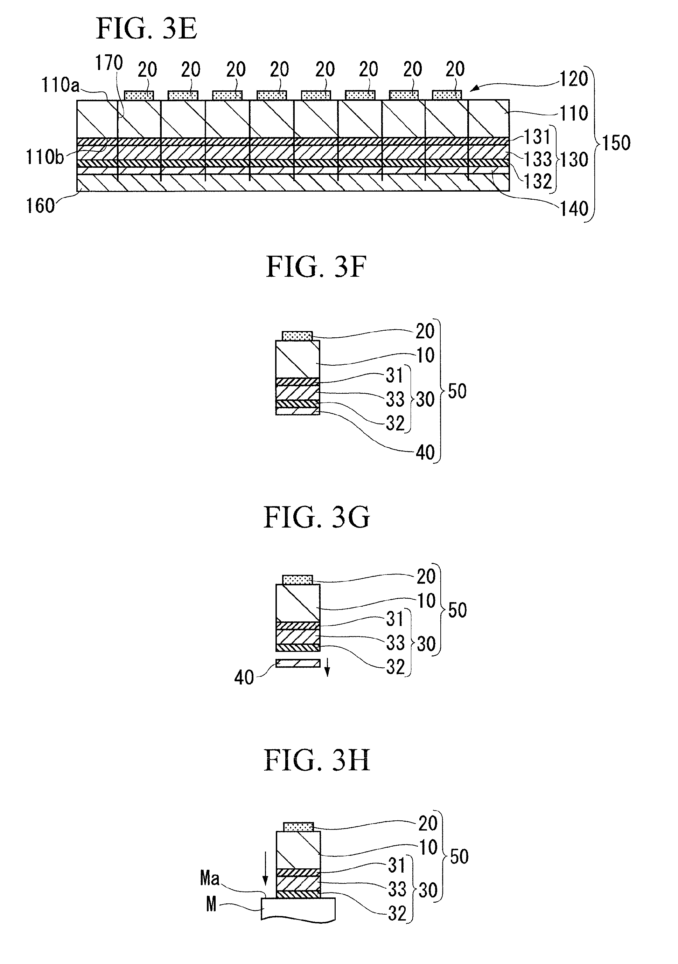

After the dicing tape 160 is bonded to the stacked body 150, the stacked body 150 is cut (cutting step, fourth step) as illustrated in Fig. 3E. The cutting of the stacked body 150 is performed, for example, using a dicing machine. In the cutting step, the stacked body 150 is cut along the sections D formed on the first surface 110a of the silicon wafer 110 by the dicing machine. In the cutting step, a part on the top side of the dicing tape 160 is cut, the bottom side of the dicing tape 160 is not cut, and the bottom side remains. Accordingly, the stacked body 150 is diced with cutting surfaces 170 in a state in which the stacked body 150 is supported by the dicing tape 160.

After the stacked body 150 is cut, the diced stacked bodies (hereinafter referred to as unit stacked bodies) 50 are peeled off from the dicing tape 160 (removing step) as illustrated in Fig. 3F. In the removing step, the support of the dicing tape 160 supporting the unit stacked bodies 50 is released. Accordingly, the dicing tape 160 is removed from the unit stacked bodies 50.

The removing step is performed in a state in which the adhesive force between the dicing tape 160 and the protective sheet 140 is smaller than the adhesive force between the protective sheet 140 and the second adhesive layer 132. Accordingly, it is possible to prevent the protective sheet 140 from being peeled off from the second adhesive layer 132 and being removed along with the dicing tape 160 when the dicing tape 160 is removed from the unit stacked bodies 50. For example, by using the dicing tape 160 having an adhesivity smaller than the adhesivity of the second adhesive layer 132 in advance, it is possible to realize the above-mentioned bonding state.

The dicing tape 160 and the protective sheet 140 may be bonded using an adhesive of which the adhesive force becomes smaller than the adhesive force of the second adhesive layer 132 by irradiation with predetermined light. In this case, the above-mentioned bonding state can be realized by irradiating an interface (contact part) between the dicing tape 160 and the protective sheet 140 with the predetermined light to lower the adhesivity of the adhesive in the interface before the removing step.

Each unit stacked body 50 cut from the stacked body 150 has a configuration including the chip 10 which is a part of the silicon wafer 110, the biomolecule portion 20 formed in each section D of the silicon wafer 110, the adhesive portion 30 which is a part of the adhesive sheet 130, and the protective portion (protective layer) 40 which is a part of the protective sheet 140.

Then, after the dicing tape 160 is removed, the protective portion 40 is peeled off from the unit stacked body 50 (peeling step) as illustrated in Fig. 3G. In the peeling step, the protective portion 40 is peeled off from the second adhesive material 32, for example, by applying an external force such as an electrostatic force or a suction force. By peeling off the protective portion 40, the surface of the second adhesive material 32 having a predetermined adhesivity is exposed.

After the protective portion 40 is peeled off, the unit stacked body 50 is fixed to the support surface Ma of the support device M (fixing step) as illustrated in Fig. 3H. In the fixing step, first, the second adhesive material 32 is aligned with the fixing portion of the support surface Ma in a state in which the surface of the second adhesive material 32 faces the support surface Ma. After the alignment, the unit stacked body 50 is moved to the support surface Ma and the second adhesive material 32 is pressed on the support surface Ma. Accordingly, the unit stacked body 50 is fixed to the support surface Ma.

For example, the removing step and the peeling step are performed for each unit stacked body 50 which is individually cut in the cutting step, and the unit stacked body 50 is fixed to an independent support device M. Accordingly, a plurality of support devices M in which one unit stacked body 50 is fixed to each support surface Ma are manufactured. Thereafter, a sample is dispensed to the support device M having the unit stacked body (biochip having the adhesive portion) 50 by the dispensing device (dispensing step) and a target included in the sample and the biomolecules specifically react with each other at a predetermined temperature. Subsequently, the support device M is carried to the measuring device by a robot through a step of drying the biochip. The measuring device measures an affinity (for example, connectivity or reactivity) between the target which is fluorescently labeled and the biomolecules (biomolecule portion 20) which can be specifically combined with the target by detecting fluorescent light (detection step). Accordingly, the biochip (biomolecule array) is screened. A biomolecule having a high affinity is specified based on the affinity detected in the detection step and the biomolecule is analyzed.

In this way, when the operation of dispensing the sample to the biomolecule portion 20 fixed to the support device M or the operation of measuring the biomolecule portion 20 after reaction with the sample is performed, each support device M can be individually handled. Accordingly, since it is not necessary to handle the entire substrate on which a plurality of biomolecule portions are arranged in each operation, it is possible to avoid troublesome operations and to enhance working efficiency. For example, it is possible to cope with individual measurement in which the number of samples to be measured is one without wasting resources. According to this embodiment, since each measurement target can be individually handled with high accuracy, it is possible to fix the biochip and to cut the silicon wafer 110 with high accuracy.

As described above, according to this embodiment, the stacked body 150 including the silicon wafer 110 having the first surface 110a and the second surface 110b, the biomolecule portion pattern 120 arranged on the first surface 110a, and the adhesive sheet 130 arranged on the second surface 110b are cut in a state in which the adhesive sheet 130 is interposed between the silicon wafer 110 and the dicing tape 160, the dicing tape 160 is removed from the unit stacked body 50, and the adhesive portion 30 of the unit stacked body 50 is bonded to the support device M as an object. Accordingly, a chip 10 fixing structure (substrate fixing structure 100) enabling individual handling of each measurement target can be efficiently formed. According to this embodiment, since the adhesive sheet 130 (or the adhesive portion 30) is formed of a resin material and has elasticity, the adhesive sheet can be deformed along the surface shape of the second surface 110b (the second surface 10b) of the silicon wafer 110 (or the chip 10) or the surface shape of the support surface Ma of the support device M. Accordingly, for example, the substrate fixing structure 100 according to this embodiment can be formed with high flatness even when there is a minute protrusion or groove on the support surface Ma of the support device M. Therefore, the high flatness of the interface of the biochip having the biomolecule portion 20 can be maintained. Accordingly, when the affinity (for example, connectivity or reactivity) between the target included in the above-mentioned sample and the biomolecules is detected using fluorescent light, the measuring device can measure the affinity with high accuracy. According to this embodiment, the adhesive sheet 130 (or the adhesive portion 30) is also used as a fixing portion in fixation to the protective sheet 140 or the dicing tape 160 and fixation of the unit stacked body 50 to the support device M. Accordingly, the adhesive sheet 130 (the adhesive portion 30) according to this embodiment enables a decrease in cost and a decrease in the number of steps.

### (Second embodiment)

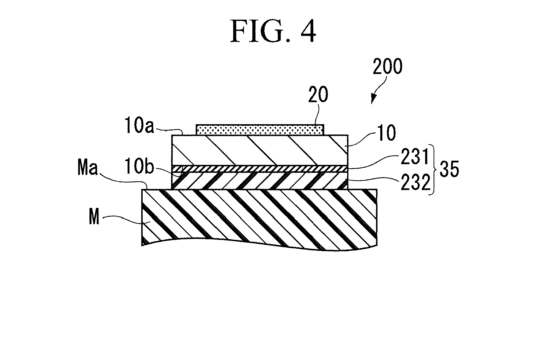

Fig. 4 is a cross-sectional view illustrating a configuration of a substrate fixing structure 200 according to this embodiment. In this embodiment, the same elements as in the first embodiment will be referenced by the same reference signs and description thereof will not be repeated or will be simplified.

As illustrated in Fig. 4, the substrate fixing structure 200 includes a support device M, a chip (substrate) 10, a biomolecule portion (a plurality of biomolecules) 20, and an adhesive portion (adhesive layer) 35. The substrate fixing structure 200 has a configuration in which a biochip having the biomolecule portion 20 on the chip 10 is fixed to the support device (object) M by the adhesive portion 35. The substrate fixing structure according to this embodiment is different from that of the first embodiment in the configuration of the adhesive portion 35.

The adhesive portion 35 includes an adhesive material 231 and a fusion material 232. The adhesive material 231 is bonded to the second surface 10b of the chip 10. The fusion material 232 is fixed to the chip 10 with the adhesive material 231 interposed therebetween. The fusion material 232 is formed of, for example, a resin material such as polyethylene terephthalate (PET) or cellophane and is fused and bonded onto the support device M. The fusion material 232 has a characteristic of softening (for example, melted) by irradiation with predetermined energy waves (for example, ultrasonic waves or laser light) or heat treatment. The fusion material 232 has a characteristic of having an adhesivity when being irradiated with the energy waves. The fusion material 232 can have no adhesivity when not being softened.

It is assumed that the support device M according to this embodiment is formed of a resin material such as PET. The support device M may be formed of another material such as quartz. Other configurations of the support device M is the same as in the first embodiment.

The method (substrate fixing method, substrate cutting method) of manufacturing the substrate fixing structure 200 having the above-mentioned configuration will be described below.

Parts (a)-(f) of Fig. are diagrams illustrating the procedure of manufacturing the substrate fixing structure 200. In this embodiment, the steps (which includes the first step) of forming a plurality of biomolecule portions 20 (biomolecule portion pattern 120) in the sections D which are partitioned in a matrix shape on the first surface 110a of the silicon wafer 110 are the same as in the above-mentioned embodiment.

First, the biomolecule portion pattern 120 is formed on the first surface 110a of the silicon wafer 110 and then an adhesive sheet (adhesive layer) 230 is bonded to the second surface 110b of the silicon wafer 110. The size, shape, and the like of the adhesive sheet 230 are designed to cover at least the sections D in which the biomolecule portion pattern 120 is formed in the silicon wafer 110.

The adhesive sheet 230 includes an adhesive portion 233 and a support film (support substrate) 234. The adhesive portion 233 is bonded to the second surface 110b of the silicon wafer 110. The support film 234 is interposed between the first adhesive layer 131 and the second adhesive layer 132 and supports the first adhesive layer 131 and the second adhesive layer 132. The support film 234 is fixed to the chip 10 with the adhesive portion 233 interposed therebetween. The support film 234 is formed of a resin material such as cellophane and has a characteristic of softening (for example, melted) by irradiation with predetermined energy waves (such as ultrasonic waves or laser light). The support film can have no adhesivity when it is not softened. By bonding the adhesive sheet 230, a stacked body 240 including the silicon wafer 110, the biomolecule portion pattern 120, and the adhesive sheet 230 is formed (second step).

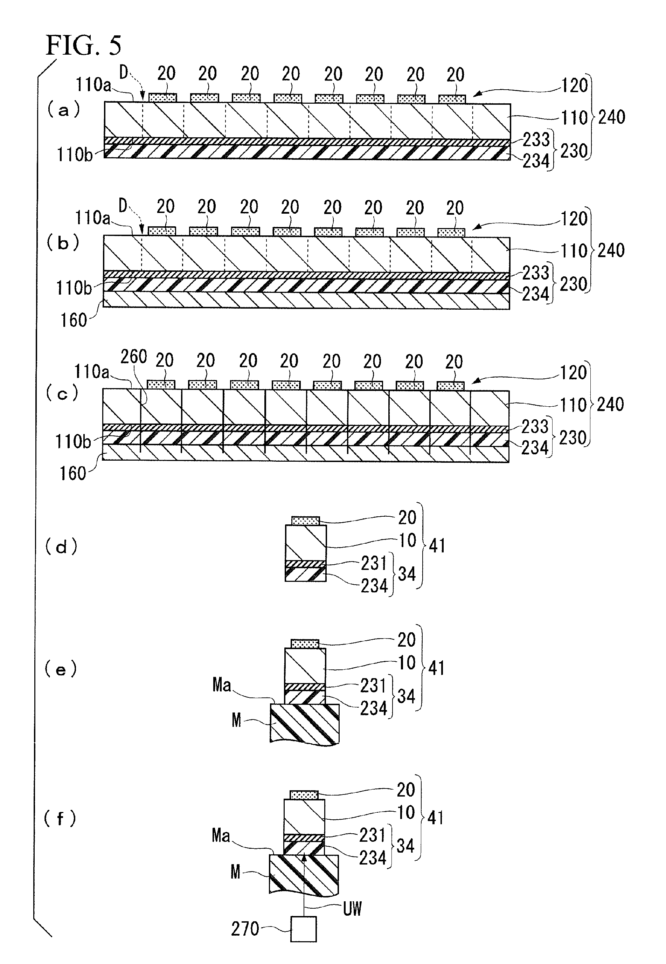

After the adhesive sheet 230 is bonded, a dicing tape (support member) 250 is bonded to the surface of the support film 234 (preparation step, third step) as illustrated in Fig. 5(b). The dicing tape 160 is disposed to interpose the adhesive sheet 230 between the silicon wafer 110 and the dicing tape 160. The silicon wafer 110 is supported by the dicing tape 160 with the adhesive sheet 230 interposed therebetween.

After the dicing tape 160 is bonded to the stacked body 240, the stacked body 240 is cut (cutting step, fourth step) as illustrated in Fig. 5(c). In the cutting step, the stacked body 240 is cut along the sections D formed on the first surface 110a of the silicon wafer 110 by the dicing machine. In the cutting step, a part on the top side of the dicing tape 160 is cut, the bottom side of the dicing tape 160 is not cut, and the bottom side remains. Accordingly, the stacked body 240 is diced with cutting surfaces 260 in a state in which the stacked body 240 is supported by the dicing tape 160.

After the stacked body 240 is cut, the diced stacked bodies (hereinafter referred to as unit stacked bodies) 41 are peeled off from the dicing tape 160 (removing step) as illustrated in Fig. 5(d). In the removing step, the support of the dicing tape 160 supporting the unit stacked bodies 41 is released. Accordingly, the dicing tape 160 is removed from the unit stacked bodies 41.

The unit stacked body 41 cut from the stacked body 240 has a configuration including the chip 10 which is a part of the silicon wafer 110, the biomolecule portion 20 which is formed in each section D of the silicon wafer 110, and the adhesive portion 34 (the adhesive material 231 and the support film 234) which is a part of the adhesive sheet 230.

After the dicing tape 160 is removed, the unit stacked body 41 is mounted on the support surface Ma of the support device M as illustrated in Fig. 5(e). In this step, the surface of the support film 234 comes in contact with the support surface Ma. In this step, the unit stacked body 41 is aligned with the fixed position of the support surface Ma.

After the unit stacked body 41 is mounted on the support surface Ma, the unit stacked body 41 is fixed to the support surface Ma of the support device M by fusion (fixing step) as illustrated in Fig. 5(f). In the fixing step, the interface between the support film 234 and the support surface Ma is irradiated with energy waves UW such as ultrasonic waves, for example, using an energy wave irradiation device 270. The surface of the support film 234 is melted by irradiation (predetermined process) with the energy waves UW. Since the support film 234 has an adhesivity due to the fusing, the support film 234 is bonded to the support surface Ma. By bonding substantially the entire surface of the support film 234 to the support surface, it is possible to enhance the adhesivity. After the support film 234 is bonded to the support surface Ma, the support film 234 is hardened. Accordingly, the substrate fixing structure 200 in which the chip 10 is fixed to the support surface Ma with the adhesive material 231 and the fusion material 232 is formed. In this embodiment, when the support device M is formed of a resin material having a melting point substantially equal to the melting point of the support film 234, the support surface Ma is melted by irradiation with the energy waves UW. Accordingly, the adhesivity to the support film 234 is further enhanced.

As in the first embodiment, the removing step and the peeling step are performed for each unit stacked body 41 which is individually cut in the cutting step, and the unit stacked body 41 is fixed to an independent support device M. Accordingly, a plurality of support devices M in which one unit stacked body 41 is fixed to each support surface Ma are manufactured. The subsequent steps are the same as in the first embodiment.

As described above, according to this embodiment, since the support film 234 of the adhesive portion 34 is bonded to the support surface Ma by melting, the chip 10 can be fixed to the support device M with a high adhesivity. The support film 234 can have no adhesivity when it is not melted. Accordingly, for example, the stacked body 240 is aligned before the melting and then the stacked body 240 is melted and bonded. In this way, it is possible to freely set the bonding timing.

### (Third embodiment)

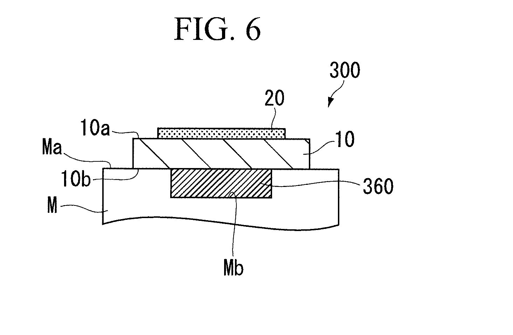

Fig. 6 is a cross-sectional view illustrating a configuration of a substrate fixing structure 300 according to this embodiment. In this embodiment, the same elements as in the first embodiment will be referenced by the same reference signs and description thereof will not be repeated or will be simplified.

As illustrated in Fig. 6, the substrate fixing structure 300 includes a support device (object) M, a chip (substrate) 10, and a biomolecule portion (a plurality of biomolecules) 20. The substrate fixing structure 300 has a configuration in which a biochip having the biomolecule portion 20 on the chip 10 is fixed to the support device M by an adhesive portion 360 disposed in the support device M. The substrate fixing structure 300 according to this embodiment is different from that of the first embodiment, in that the adhesive portion 360 for fixing the chip 10 to the support device M is disposed on the support device M side.

The support device M has a groove portion Mb on the support surface Ma. The adhesive portion 360 is disposed in the groove portion Mb. For example, the adhesive portion 360 includes a photocurable adhesive which is hardened by irradiation with light (such as UV light). The adhesive portion 360 is bonded to the second surface 10b of the chip 10. An area other than the area bonded to the adhesive portion 360 on the second surface 10b of the chip 10 comes in contact with the support surface Ma.

The method (substrate fixing method) of manufacturing the substrate fixing structure 300 having the above-mentioned configuration will be described below.

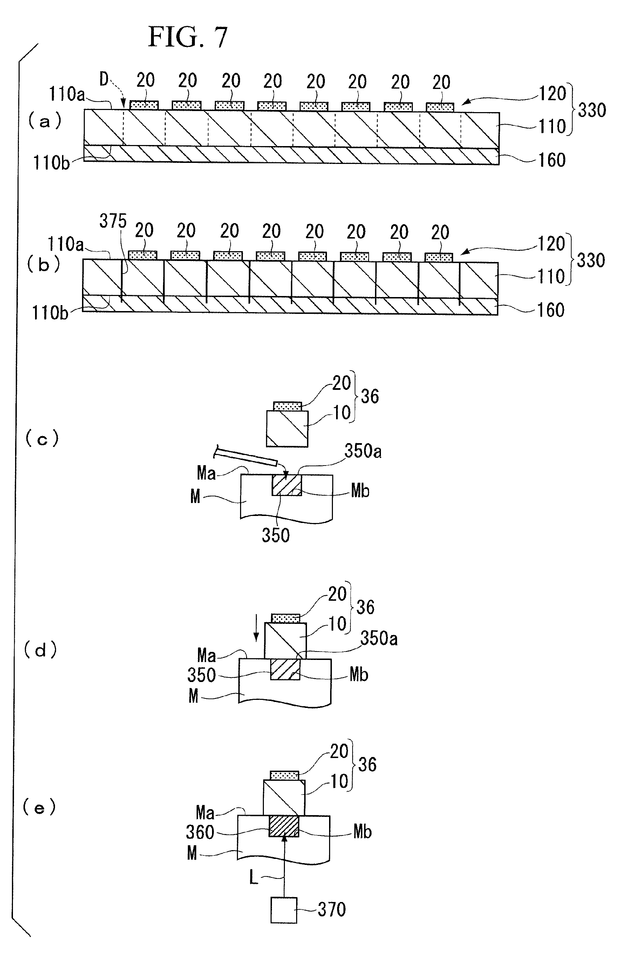

Parts (a)-(e) of Fig. 7 are diagrams illustrating the procedure of manufacturing the substrate fixing structure 300. In this embodiment, the step of forming a plurality of biomolecule portions 20 (biomolecule portion pattern 120) in the sections D which are partitioned in a matrix shape on the first surface 110a of the silicon wafer 110 is the same as in the above-mentioned embodiment. In this embodiment, a stacked body 330 including the silicon wafer 110 and the biomolecule portion pattern 120 is formed by forming the biomolecule portion pattern 120.

After the biomolecule portion pattern 120 is formed on the first surface 110a of the silicon wafer 110, a dicing tape (support member) 340 is bonded to the second surface 110b of the silicon wafer 110 (preparation step) as illustrated in Fig. 7(a). The second surface 110b of the silicon wafer 110 is supported directly by the dicing tape 160.

After the dicing tape 160 is bonded to the stacked body 330, the stacked body 330 is cut (cutting step) as illustrated in Fig. 7(b). In the cutting step, the stacked body 330 is cut along the sections D formed on the first surface 110a of the silicon wafer 110 by the dicing machine. In the cutting step, a part on the top side of the dicing tape 160 is cut, the bottom side of the dicing tape 160 is not cut, and the bottom side remains. Accordingly, the stacked body 330 is diced with cutting surfaces 375 in a state in which the stacked body 330 is supported by the dicing tape 160.

After the stacked body 330 is cut, the diced stacked bodies (hereinafter referred to as unit stacked bodies) 36 are peeled off from the dicing tape 160 (removing step) as illustrated in Fig. 7(c). In the removing step, the support of the dicing tape 160 supporting the unit stacked bodies 36 is released. Accordingly, the dicing tape 160 is removed from the unit stacked bodies 36. The unit stacked body 36 cut from the stacked body 330 has a configuration including the chip 10 which is a part of the silicon wafer 110 and the biomolecule portion 20 which is formed in each section D of the silicon wafer 110.

After the dicing tape 160 is removed, the unit stacked body 36 is fixed to the support surface Ma (fixing step). In the fixing step, a liquid adhesive 350 is injected into the groove portion Mb which is formed on the support surface Ma of the support device M. An amount of adhesive 350 injected is adjusted such that the surface 350a thereof is coplanar with the support surface Ma. After the adhesive 350 is injected into the groove portion Mb, the unit stacked body 36 is mounted on an area (bonding area) in which the groove portion Mb (the adhesive 350) is formed in a plan view on the support surface Ma. In this step, a part of the second surface 10b of the chip 10 comes in contact with the adhesive 350 and another part comes in contact with the support surface Ma. In this state, since the chip 10 is not fixed by the adhesive 350, the alignment of the chip 10 or the like can be performed.

After, the unit stacked body 36 is mounted on the support surface Ma, the adhesive 350 is irradiated with predetermined light L such as UV light from an irradiation unit 370 as illustrated in Fig. 7(e). By irradiation with the light L (a predetermined process), the adhesive 350 is hardened while in contact with the second surface 10b of the chip 10 to form the adhesive portion 360. The chip 10 is fixed to the support surface Ma by the adhesive portion 360. Accordingly, the substrate fixing structure 300 in which the unit stacked body 36 (chip 10 having the biomolecule portion 20) is fixed to the support surface Ma with the adhesive portion 360 is formed. In this case, the support device M is formed of a material including a light-transmitting material that can transmit light L. The support device M has an optical path transmitting the light L from at least a part thereof to the bonding surface (the support surface Ma) to the adhesive portion 360.

As in the first embodiment, the removing step and the peeling step are performed for each unit stacked body 36 which is individually cut in the cutting step, and the unit stacked body 36 is fixed to an independent support device M. Accordingly, a plurality of support devices M in which one unit stacked body 36 is fixed to each support surface Ma are manufactured. The subsequent steps are the same as in the first embodiment.

As described above, according to this embodiment, since the adhesive portion 360 is disposed in the support device M, it is possible to fix the chip 10 to the support device M with a great adhesivity. Since the unit stacked body 36 is not fixed until the adhesive 350 is irradiated with light L, alignment or the like can be performed while the unit stacked body 36 is placed on the adhesive 350. In this way, it is possible to freely set the bonding timing.

The technical scope of the present invention is not limited to the above-mentioned embodiments, but can be modified without departing from the gist of the present invention.

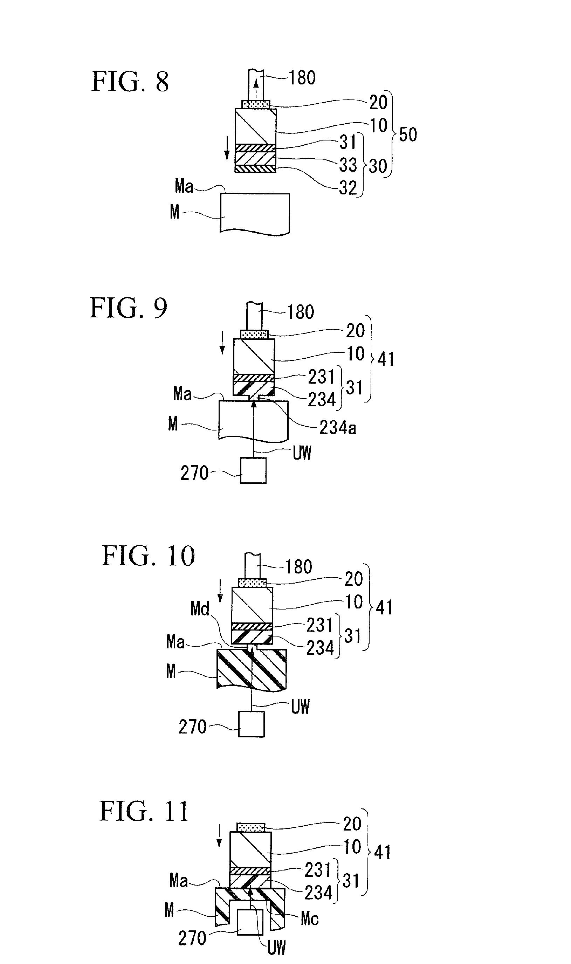

Fig. 8 is a diagram illustrating a process when a substrate fixing structure is manufactured.

For example, in the above-mentioned embodiments, when the unit stacked bodies are moved such as when the unit stacked bodies (50,41, and 36) are fixed to the support surface Ma, the first surface 10a of the chip (substrate) may be held with a suction force of a suction pipe 180 or the like (holding step) as illustrated in Fig. 8. Accordingly, the individually-cut unit stacked bodies (50,41, and 36) can be easily treated.

Fig. 9 is a diagram illustrating a process when a substrate fixing structure is manufactured.

For example, as illustrated in Fig. 9, the second embodiment may employ a configuration in which a protrusion 234a is formed on the surface of the support film 234 and the protrusion 234a is irradiated with energy waves UW. In this case, since the protrusion 234a is concentrically irradiated with the energy waves UW, the protrusion 234a is melted in a short time. Accordingly, it is possible to efficiently fix the unit stacked body 41 to the support surface Ma.

Fig. 10 is a diagram illustrating a process when a substrate fixing structure is manufactured.

For example, as illustrated in Fig. 10, the second embodiment may employ a configuration in which a protrusion Md is formed on the support surface Ma of the support device M instead of the surface of the support film 234 and the protrusion Md is irradiated with energy waves UW. In this case, since the protrusion Md is concentrically irradiated with the energy waves UW in the same way as illustrated in Fig. 9, the protrusion Md is melted in a short time. Accordingly, it is possible to efficiently fix the unit stacked body 41 to the support surface Ma.

Fig. 11 is a diagram illustrating a process when a substrate fixing structure is manufactured.

For example, as illustrated in Fig. 11, the second embodiment may employ a configuration in which a concave portion Mc is formed on the side opposite to the support surface Ma of the support device M and energy waves UW are applied in a state in which a part of the irradiation side of the energy wave irradiation device 270 is disposed in the concave portion Mc. Accordingly, since attenuation of the energy waves UW can be suppressed, it is possible to efficiently irradiate the interface between the surface of the support film 234 and the support surface Ma with the energy waves UW.

Examples of the support device according to the above-mentioned embodiments will be described below.

### (Support device 1)

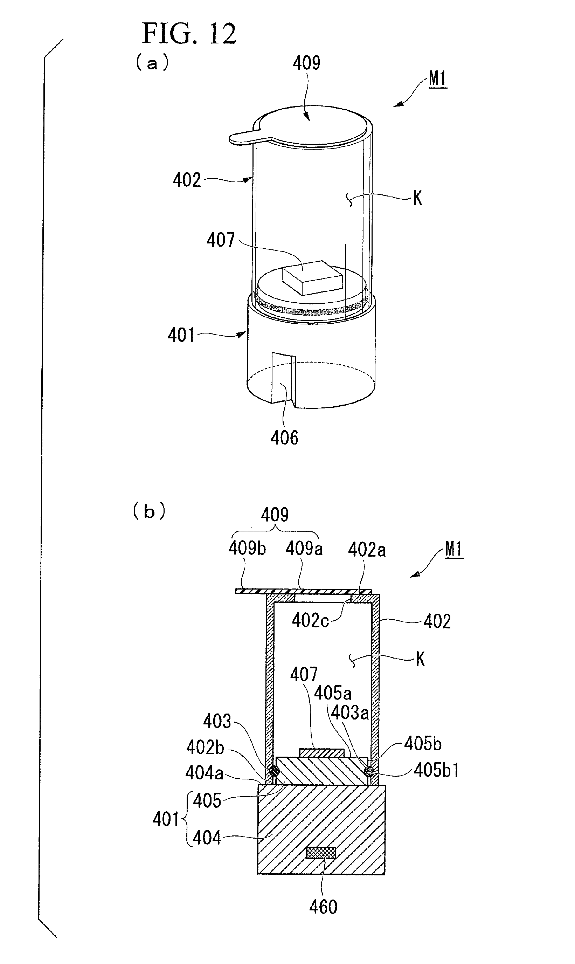

Parts (a)-(b) of Fig. 12 are diagrams illustrating a configuration of a support device M1.

As illustrated in parts (a)-(b) of Fig. 12, the support device M1 includes a body section 401 that supports a biochip (biomolecule array) 407 in which biomolecules (for example, biomolecules which are a basic material constituting a biological body) capable of specifically reacting with a target which is included in a sample and fluorescently labeled and a sample accommodating section 402 that is detachable from the body section 401 and that forms an accommodation space K in which a sample is accommodated between the body section 401 and the sample accommodating section at the time of attachment. The support device M1 in this embodiment has a configuration which is suitable for continuously (or consistently) performing dispensation and measurement of a sample (for example, whole blood or blood serum). The support device M1 in this embodiment has a capsule structure in which the accommodation space K for accommodating a sample is formed therein by attaching the body section 401 and the sample accommodating section 402 to each other. The biochip 407 includes the chip 10 and the biomolecule portion 20 in the above-mentioned embodiments.

The body section 401 includes a base 404 and a pedestal 405 protruding from the top surface (second surface) 404a of the base 404.

In this embodiment, the base 404 is a cylindrical member having a circular shape in a plan view when viewed from the top surface 404a side. For example, the shape of a cross-section parallel to the top surface 404a is circular.

A groove (positioning portion) 6 is formed in the height direction of the base 404 in a part of the outer circumferential surface of the base 404. The groove 406 is a positioning notch which is used for positioning in the circumferential direction of a vertical axis line passing through the center of the base 404. The groove 406 is also used for positioning in the rotation direction with respect to a measuring device in measurement to be described later. The positioning portion is not particularly limited as long as it can position the body section 401, and a concave portion, a convex portion, or a structure as a combination of a concave portion and a convex portion may be employed.

The biochip (biomolecule array) 407 is mounted on a support surface 405a of the pedestal 405. For example, in this embodiment, the support surface 405a of the pedestal 405 constitutes a fixing surface for fixing the biochip 407. The biochip 407 is cut using the substrate cutting method according to the above-mentioned embodiments and is fixed to the support surface 405a using the substrate fixing method according to the above-mentioned embodiments.

A side surface 405b of the pedestal 405 is connected to the support surface 405a in an intersection manner. In this embodiment, in the pedestal 405, the support surface 405a and the side surface 405b are connected substantially in a perpendicular manner (at a right angle).

The pedestal 405 has a cylindrical shape in a plan view when viewed from the support surface 405a side, similarly to the base 404. The support surface 405a of the pedestal 405 and the top surface 404a of the base 404 are substantially parallel to each other. The cross-section of the pedestal 405 parallel to the support surface 405a has a circular shape having a smaller outer diameter than the base 404 (smaller cross-sectional area). The base 404 is configured such that the area of the cross-section parallel to the support surface 405a of the pedestal 405 is larger than the area of the support surface 405a. The base 404 has a cross-section similar to the support surface 405a as a cross-section parallel to the support surface 405a.

In this embodiment, the body section 401 is formed, for example, by molding quartz or a resin material, and the pedestal 405 is molded integrally with the base 404. Accordingly, the side surface 405b of the pedestal 405 and the top surface 404a of the base 404 are connected (are continuous). In this case, the top surface (second surface) 404a of the base 404 refers to a surface defined to exclude a formation area of the pedestal 405.

The pedestal 405 may be formed as an independent member separated from the base 404 and the pedestal 405 is attached to the base 404, for example, with an adhesive or a screw. In this case, an interface is formed between the base 404 and the pedestal 405, but it is assumed that the side surface 405b of the pedestal 405 and the base 404 are substantially connected (continuous). In this case, the top surface (second surface) 404a of the base 404 refers to a surface defined to exclude a mounting area (interface) of the pedestal 405. In this embodiment, the top surface 404a of the base 404 can come in contact with the sample accommodating section 402 as will be described later.

In this embodiment, the support device M1 includes a sealing member 403 which is disposed between the side surface 405b of the pedestal 405 and the sample accommodating section 402. The sealing member 403 is disposed over the entire circumference of the side surface 405b of the pedestal 405. The sealing member 403 is a seal material that can seal the accommodation space K of a sample between the sample accommodating section 402 and the side surface 405b. In this embodiment, an O ring formed of, for example, a nitrile rubber, a styrene butadiene rubber, silicon rubber, or fluorine rubber is used as the sealing member 403. For example, as illustrated in Fig. 12(b), a notched groove 405b1 is formed over the entire circumference of the side surface 405b of the pedestal 405 and the sealing member 403 is disposed to be fitted into the groove 405b1. Accordingly, it is possible to prevent the sealing member 403 from being detached with attachment and detachment of the sample accommodating section 402. The method of fixing the sealing member 403 to the pedestal 405 is not limited to this method, but the sealing member 403 may be bonded and fixed, for example, using an adhesive.

When sufficient sealability to prevent any substantial leakage of a sample from the accommodation space K between the side surface 405b of the pedestal 405 and the sample accommodating section 402 is obtained in a state in which the sample accommodating section 402 is attached to the body section 401, the sealing member 403 is not necessary.

The sealing member 403 may be disposed in the sample accommodating section 402.

The sample accommodating section 402 is attachable to and detachable from the body section 401 and forms the accommodation space K in which a sample is accommodated between the body section 401 and the sample accommodating section 402. The sample accommodating section 402 is formed, for example, by molding a resin material. The material of the sample accommodating section 402 in this embodiment is a transparent plastic material such as polymethyl methacrylate (PMMA) or polycarbonate (PC). Accordingly, the sample accommodating section 402 has a light-transmitting property and the inside thereof can be visually recognized even in a state in which the sample accommodating section 402 is attached to the body section 401. The entire sample accommodating section 402 does not have to have a light-transmitting property, and only at least a part thereof has to have a light-transmitting property such that the accommodation space K can be visually recognized from the outside.

As described above, since the body section 401 includes the base 404 and the pedestal 405, workability thereof is relatively high and thus flatness of the members (the base 404 and the pedestal 405) is relatively high. Accordingly, since the flatness of the support surface 405a of the pedestal 405 constituting a support surface supporting the biochip 407 is relatively high, the biochip 407 and a measuring device can be accurately positioned when measurement is performed using the measuring device to be described later and it is thus possible to perform highly reliable measurement.

The sample accommodating section 402 is formed of a bottomed cylinder member having a bottom on one surface, for example, a cylindrical member with an outer diameter of 7 mm. The height of the sample accommodating section 402 is set, for example, to satisfactorily cover the top surface of the biochip 407 with a sample in the accommodation space K. The sample accommodating section 402 is attached to the body section 401 such that an end (a part of the sample accommodating section 402) 2b thereof opposite to the bottom surface 402a surrounds the side surface 405b of the pedestal 405 of the body section 401. The bottom surface 402a of the sample accommodating section 402 faces the support surface 405a of the pedestal 405 of the body section 401 when the sample accommodating section 402 is fitted to the body section 401. The end 402b of the sample accommodating section 402 has an inner shape with an inner diameter equal to or slightly larger than the profile of the pedestal 405. Here, the inner shape with an inner diameter equal to or slightly larger than the profile of the pedestal 405 refers to a state in which the sealing member 403 disposed on the side surface 405b is pressed against and comes in close contact with the inner surface of the end 402b to exhibit satisfactory sealing performance when the end 402b of the sample accommodating section 402 is fitted to the side surface 405b of the pedestal 405.

Alternatively, when the sealing member 403 is not disposed, the inner shape of the end 402b only has to provide sufficient sealability to prevent any substantial leakage of a sample from the accommodation space K between the side surface 405b of the pedestal 405 and the sample accommodating section 402 when the sample accommodating section 402 is attached to the body section 401.

In this embodiment, the sample accommodating section 402, a groove 3a having a semi-spherical cross-sectional shape corresponding to the profile of the sealing member 403 is formed over the entire circumference of the inner surface in an area of the inner surface of the end 402b coming in contact with the sealing member 403. When the sample accommodating section 402 is fitted to the body section 401, the pressed sealing member 403 goes into the groove 3a and it is thus possible to increase a contact area between the sealing member 403 and the end 402b to improve sealing performance.

When the sample accommodating section 402 is fitted to the body section 401, the end 402b comes in contact with the top surface 404a of the base 404 in the body section 401. That is, the top surface 404a of the base 404 serves as a stopper that regulates downward (downward in the vertical direction) movement of the end 402b of the sample accommodating section 402 fitted to the body section 401 in the height direction of the body section 401.

An opening 402c having a circular planar shape is formed on the bottom surface 402a of the sample accommodating section 402. The opening 402c is used to inject a sample into the inside (accommodation space K) of the sample accommodating section 402. The center of the opening 402c may or may not match (may be eccentric from) the center of the bottom surface 402a of the sample accommodating section 402. The opening 402c is covered with a seal (sealing member) 409. The seal 408 is disposed to cover the opening 402c using a paste disposed on the rear surface thereof and is detachable. The seal 409 is substantially equal in size to (which includes slightly larger or slightly smaller than) the bottom surface 402a of the sample accommodating section 402, and includes a cover portion 409a covering the opening 402c and a gripper portion 9b that is disposed in the cover portion 409a and that protrudes from the bottom surface 402a in a state in which the gripper portion is attached to the sample accommodating section 402. A measurer can easily peel off the seal 409 from the bottom surface 402a of the sample accommodating section 402 by gripping and pulling the gripper portion 9b, for example, with a finger or a robot.

In the sample accommodating section 402, since the opening 402c is covered with the seal 409 in a non-used state, it is possible to prevent attachment of foreign matter such as contamination or dust to biomolecules (spots) of the biochip 407. The opening 402c is exposed by peeling off the seal 409 to be used as an injection port for injecting a sample into the sample accommodating section 402.

In this embodiment, in the body section 401, an identification element for identifying predetermined information on a sample or biomolecules is disposed in at least one of the base 404 and the pedestal 405. In this embodiment, an IC tag 460 is built in the base 404 as the identification element. The IC tag 460 may be built in the pedestal 405. Examples of the predetermined information include the type or the arrangement position of biomolecules formed on the biochip 407 and the type of the used sample. The IC tag 460 may include, for example, a maker, a production number, a production date and time, and a term of validity of the support device M1.

By employing the above-mentioned configuration, the support device M1 is configured to easily attach and detach the sample accommodating section 402 to and from the body section 401.

In the support device M1, when the sample accommodating section 402 is attached to the body section 401, the pedestal 405 of the body section 401 is positioned to go into the end 402b of the sample accommodating section 402, and a coupling force is applied to bring the end 402b of the sample accommodating section 402 into contact with the top surface 404a of the base 404 (the body section 401) in the height direction (the vertical direction in Fig. 12(a)) of the support device M1. At this time, the pedestal 405 of the body section 401 is fitted to the inner surface of the end 402b of the sample accommodating section 402, and the sealing member 403 disposed on the side surface 405b of the pedestal 405 is pressed against the inner surface of the end 402b of the sample accommodating section 402. In the sample accommodating section 402, when the end 402b comes in contact with the top surface 404a of the base 404, the sealing member 403 is fitted to the groove 3a. Accordingly, the accommodation space K can be sealed by the sample accommodating section 402, the support surface 405a of the pedestal 405, a part of the side surface 405b, and the sealing member 403.

On the other hand, when the sample accommodating section 402 is detached from the body section 401 in the support device M1, a force for separating the sample accommodating section 402 and the body section 401 from each other is applied in the height direction of the support device M1. Accordingly, the end 402b of the sample accommodating section 402 is separated from the top surface 404a of the base 404 (the body section 401) and the sample accommodating section 402 is detached from the body section 401, thereby separating the sample accommodating section 402 and the body section 401 from each other.

### (Support device 2)

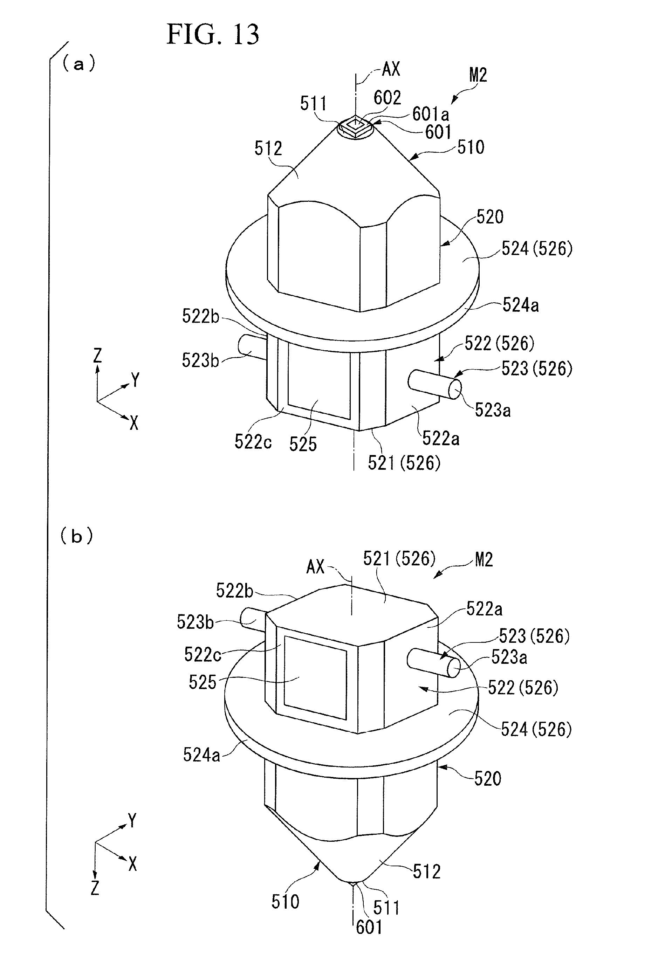

Parts (a)-(b) of Fig. 13 are perspective views illustrating a configuration of a support device M2 according to this embodiment.

The support device M2 includes a support section 10 having, for example, a profile of a truncated cone shape and a handling section 520 having, for example, a profile of a polygonal shape. The support section 510 and the handling section 520 are formed of, for example, quartz or a resin material and are formed integrally in a state in which ends in the height direction are connected to each other. The support section 510 and the handling section 520 have a common central axis AX parallel to the height direction.

The support device M2 according to this embodiment has a configuration which is suitable for continuously (or consistently) performing dispensation and measurement of a sample (for example, whole blood or blood serum). The handling section 520 is configured to individually handle biochips 601 in which biomolecules are formed on a substrate in the dispensation and the measurement.

In parts (a)-(b) of Fig. 13, the height direction of the support section 510 and the handling section 520 is defined as a Z axis direction, a predetermined direction in a plane perpendicular to the Z axis direction is defined as an X axis direction, and a direction perpendicular to the X axis direction in the plane is defined as a Y axis direction. Circumferential directions about the X axis, the Y axis, and the Z axis are defined as θX, θY, and θZ directions, respectively.

The support section 510 supports a biochip 601 formed in a rectangular plate shape, for example, using silicon. A biomolecule portion 602 is formed on the surface 601a of the biochip 601. A biochip including the chip 10 and the biomolecule portion 20 according to the above-mentioned embodiment is used as the biochip 601. The biochip 601 is cut using the substrate cutting method according to the above-mentioned embodiment and is fixed to the support surface 511 using the substrate fixing method according to the above-mentioned embodiment.

The support section 510 includes a circular support surface 511 and a side surface 512 extending in the -Z direction from the outer edge (for example, the outer circumference) of the support surface 511 to the handling section 520. The support surface 511 is a surface supporting the biochip 601 and is parallel to the XY plane. The support surface 511 is formed flat over substantially the entire surface and has an area larger than that of the biochip 601.

The biochip 601 is fixed to the support surface 511 with an adhesive portion such as an adhesive or an adhesive tape that is not illustrated. The fixation of the biochip 601 is not limited to the above-mentioned configuration using the adhesive portion, but, for example, a configuration in which the biochip 601 is welded to the support surface 511 may be employed. The biochip 601 is fixed such that the surface 601a thereof is parallel to the support surface 511.

The side surface 512 of the support section 510 is tilted at a predetermined tilt angle to gradually approach the central axis AX from the side surface 522 of the handling section 520 to the support surface 511 of the support section 510 (in the +Z direction). Accordingly, the support section 510 decreases in thickness from the handling section 520 to the support surface 511 (in the +Z direction). For example, the support section 510 gradually increases in thickness from the support surface 511 to the handling section 520 (in the -Z direction). In the junction of the support section 510 and the handling section 520, the thickness of the support section 510 and the thickness of the handling section 520 are equal to each other. Accordingly, the support section 510 and the handling section 520 are connected to each other without forming a stepped portion. In the junction of the support section 510 and the handling section 520, the thickness of the support section 510 and the thickness of the handling section 520 may be different from each other and thus a stepped portion may be formed between the support section 510 and the handling section 520.

The handling section 520 is formed such that an area of a cross-section in the XY plane is larger than the area of the support surface 511. The handling section 520 includes a bottom surface 521 and a side surface 522 extending in the +Z direction from the outer circumference of the bottom surface 521 to the support section 510. The bottom surface 521 is formed, for example, in an octagonal shape and is parallel to the support surface 511 (the XY plane). The bottom surface 521 is formed flat over almost the entire surface.

The handling section 520 includes a protruding portion 523, a flange portion 524, and an identification information holding portion 525.

The protruding portion 523 includes a first protruding portion 523a disposed on a first surface 522a on the +X side of the side surface 522 and a second protruding portion 523b disposed on a second surface 522b on the -X side. The first surface 522a and the second surface 522b are parallel to the YZ plane and have the same shape when viewed in the X axis direction and the same sizes in the Y axis direction and the Z axis direction.

The first protruding portion 523a protrudes in a direction (the +X direction) perpendicular to the first surface 522a. The second protruding portion 523b protrudes in a direction (the -X direction) perpendicular to the second surface 522b. The first protruding portion 523a and the second protruding portion 523b may be formed of the same member as the handling section 520, or may be formed of members other than the handling section 520 and may be attached to the handling section 520.

The first protruding portion 523a and the second protruding portion 523b are formed in a cylindrical shape and have the same diameter and the same size in the X direction. The first protruding portion 523a and the second protruding portion 523b are located at positions equidistant from the bottom surface 520a of the handling section 520 in the Z direction. The first protruding portion 523a and the second protruding portion 523b are located at the centers of the first surface 522a and the second surface 522b in the Y direction.

One of the first protruding portion 523a and the second protruding portion 523b may be excluded. In the side surface 522, another protruding portion may be disposed on a surface other than the first surface 522a and the second surface 522b. The shape of the protruding portion 523 may be another shape such as a spindle shape, a spherical shape (which includes a part of a sphere), and a shape of which the cross-section in the YZ plane is circular or polygonal. The shapes and the sizes of the first protruding portion 523a and the second protruding portion 523b may be different from each other or the first protruding portion 523a and the second protruding portion 523b may be arranged in another form. A plurality of protruding portions 523 may be disposed on one surface (for example, the first surface 522a or the second surface 522b).

The flange portion 524 is disposed at a position on the +Z side of the protruding portion 523. The flange portion 524 has a shape which protrudes in the radial direction from an area of one circumference in the circumferential direction (the θZ direction) in the side surface 522. The flange portion 524 may be formed of the same member as the handling section 520 or may be formed of a member other than the handling section 520 and may be attached to the handling section 520.

The flange portion 524 is formed, for example, in a disc shape. The flange portion 524 is disposed in parallel to the bottom surface 520a of the handling section 520 and the support surface 511 (the XY plane) of the support section 510. The flange portion 524 has an almost constant size (thickness) in the Z direction over the entire circumference thereof.

The flange portion 524 is disposed between the protruding portion 523 and the support section 510 in the Z direction. The distance from the central axis AX to the outer circumference of the flange portion 524 is set to be smaller than the distance from the central axis AX to the tip of the protruding portion 523. Accordingly, when viewed in the Z direction, the protruding portion 523 protrudes in the radial direction from the outer circumference of the flange portion 524. The profile of the flange portion 524 may have another shape such as a rectangular shape or a polygonal shape.

The bottom surface 521, the side surface 522, the protruding portion 523, and the flange portion 524 of the handling section 520 are formed as a connection portion 526 capable of being connected to an external device. Examples of the external device include a carrying device that carries the support device M2, a case device that accommodates the support device M2, a sample accommodating device that is used for reaction of biomolecules of the biomolecule portion 602 with a sample, a sample dispensing device that includes a nozzle dispensing a sample to a dispensing stage in which the sample accommodating device is disposed and the sample accommodating device, a cleaning device that cleans the support device M2, a drying device that dries the support device M2, and a measuring device that measures the biomolecule portion 602. The sample dispensing device, the cleaning device, and the drying device are constructed as the dispensing device. In this embodiment, since the biochip 601 is handled using the support device M2, the external devices can be more easily operated in comparison with a case in which a biochip 601 is directly handled.

The identification information holding portion 525 holds predetermined information such as identification information of biomolecules or samples reacting with the biomolecules and identification information of the support device M2 (the support section 510 and the handling section 520). As the identification information holding portion 525, for example, an IC tag or a barcode is employed. When an IC tag is used as the identification information holding portion 525, for example, the held information may be rewritten or new information may be added thereto. The identification information holding portion 525 may be disposed in the support section 510. The support device M in this embodiment may be a plate-like substrate (for example, a glass slide) or a well plate. In this embodiment, a biochip is fixed to the support device M with an adhesive portion interposed therebetween.

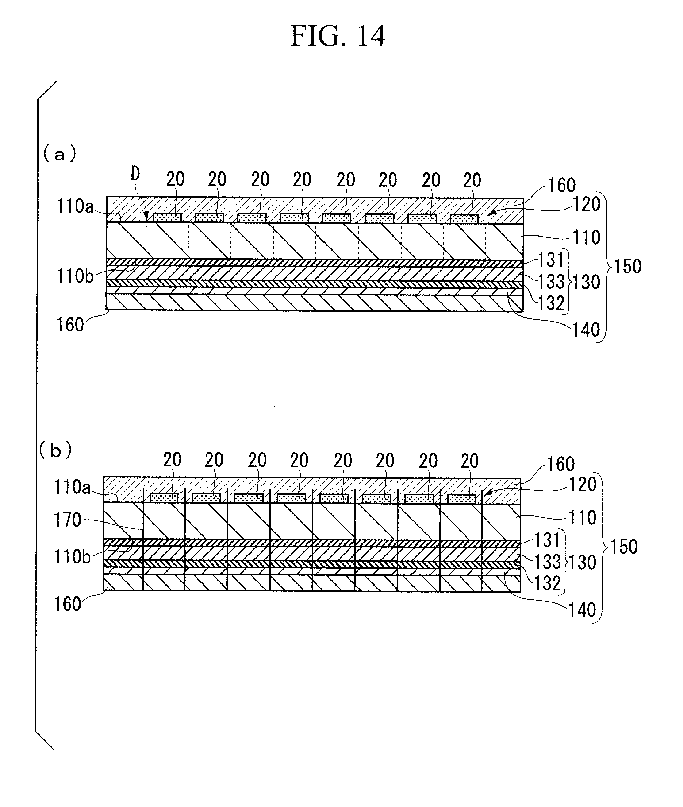

In the first to third embodiments, for example, as illustrated in parts (a)-(b) of Fig. 14, the dicing tape 160 used to manufacture the substrate fixing structure may be bonded to the top surface of the biomolecule portion 20 such that the biomolecule portion 20 is interposed between the silicon wafer 110 and the dicing tape 160. In this case, the dicing tape (support member) 160 is bonded to the surface (the first surface 110a) including the biomolecule portion 20 (preparation step, third step). The dicing tape 160 is disposed to interpose the biomolecule portion 20 between the silicon wafer 110 and the dicing tape 160. The silicon wafer 110 is held by the dicing tape 160. As illustrated in Fig. 14(a), the biomolecule portion 20, the chip 10, and the adhesive portion 30 constituting the substrate fixing structure 100 are the same as in the above-mentioned embodiments. Although not illustrated in Fig. 14(a), the protective sheet 140 may be bonded to the adhesive sheet 130.

As illustrated in Fig. 14(b), after the dicing tape 160 is bonded to the stacked body 150, the stacked body 150 is cut (cutting step, fourth step). The cutting of the stacked body 150 is performed, for example, by a dicing machine. In the cutting step, the stacked body 150 is cut along the sections D by the dicing device while observing the sections D formed on the first surface 110a of the silicon wafer 110 using a sensor (for example, an infrared camera). In the cutting step, a part on the surface side of the dicing tape 160 is cut, the bottom side of the dicing tape 160 is not cut, and the bottom side remains. Accordingly, the stacked body 150 is diced with cutting surfaces 170 in a state in which the stacked body is supported by the dicing tape 160. For example, when the dicing tape 160 is a tape which can be peeled off by irradiation with light, the dicing tape 160 can be peeled off from the stacked body 150 by irradiation with light after the cutting. The subsequent steps are the same as in the first to third embodiments. In this embodiment, since the dicing tape 160 is disposed to cover the biomolecule portion 20, liquid, dust, and the like generated by the dicing of the dicing machine are not attached to the biomolecule portion 20 and it is thus possible to reduce an influence (detection of an error in the detection step) on the biomolecule portion 20 due to the attachment.

Other embodiments of the substrate fixing device, the substrate fixing method, the mounting device, the mounting method, and the biochip-mounted base member manufacturing method of the present invention will be described below.

### (Fourth embodiment)

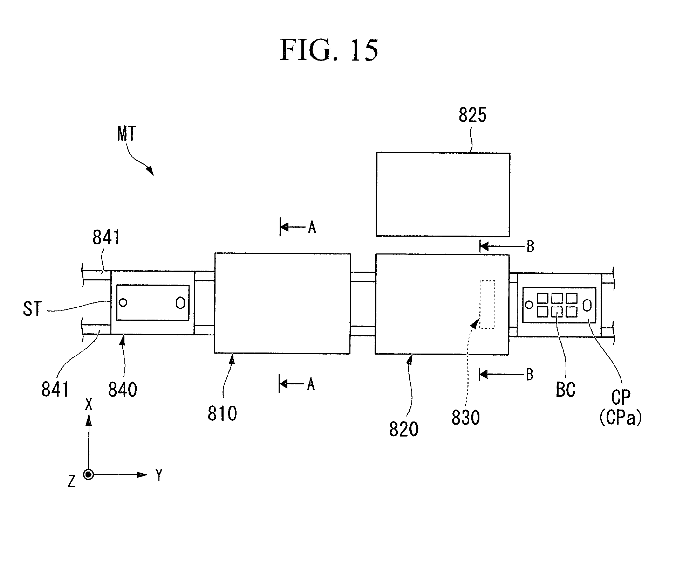

Fig. 15 is a plan view schematically illustrating a configuration of a mounting device MT according to this embodiment.

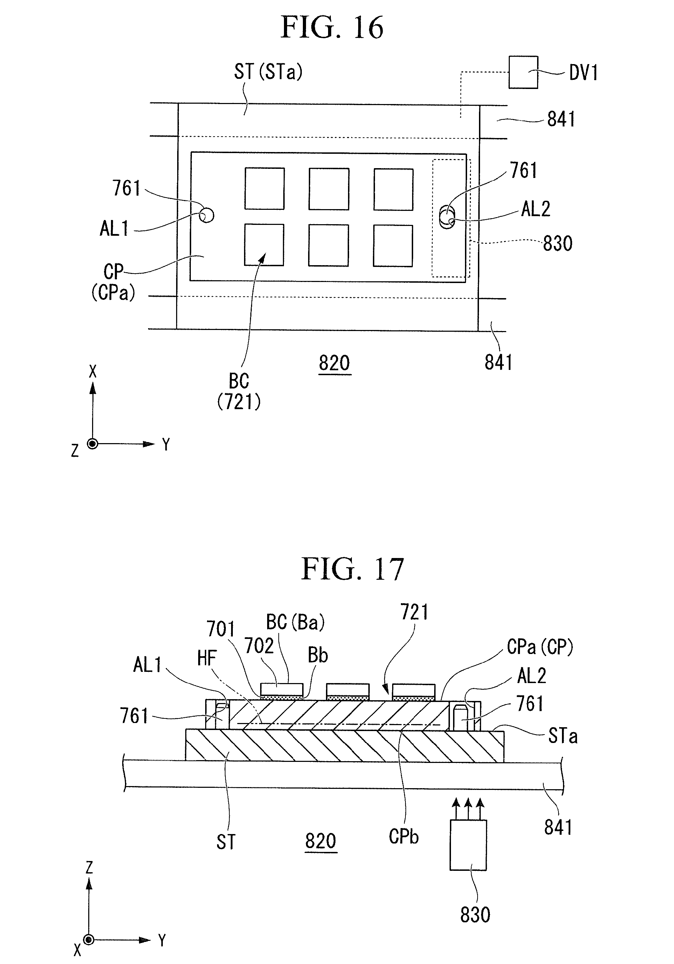

As illustrated in Fig. 15, the mounting device MT mounts a plurality of biochips (substrates) BC which are biomolecule arrays in which a plurality of biomolecules are arranged on a first surface (front surface) Ba (not illustrated in Fig. 15, see Fig. 17) on a flat panel-shaped plate (base member) CP and includes a substrate fixing device including a supply unit 810, a transfer unit 820, an irradiation unit 830, and a carrying unit 840 having a stage ST and a dicing device (feed device) 825.

In the following description, a direction in which the supply unit 810 and the transfer unit 820 are arranged is defined as a Y direction (Y axis), a direction which is perpendicular to the Y direction in the horizontal plane is defined as an X direction (X axis), and a direction which is perpendicular to the Y direction and the X direction is defined as a Z direction (Z axis). Rotation (tilt) directions about the X axis, the Y axis, and the Z axis are defined as θX, θY, and θZ directions, respectively.

Fig. 16 is a plan view illustrating the transfer unit 820 in which biochips BC are mounted on a plate CP and Fig. 17 is a cross-sectional view thereof.

The plate CP is, for example, a flat panel-like substrate having a rectangular shape in a plan view and includes a plurality of (three in the Y direction and two in the X direction, that is, six in total, as illustrated in Figs. 15 and 16) support areas (biomolecule support areas) 721 which are arranged in a matrix shape on the front surface CPa located on the +Z side with a predetermined pitch. As illustrated in Fig. 17, an adhesive 701 is disposed in the respective support areas 721, and the second surfaces (rear surfaces) Bb of the rectangular biochips BC are supported and fixed to the plate CP with the adhesive 701.

As the adhesive 701 in this embodiment, for example, a photocurable adhesive such as a UV-curable adhesive is employed in consideration of heat resistance of probes in the biochips BC. Although adhesives can be hardened at relatively high temperatures, but there is a possibility of biomolecules being denatured due to an excessively high temperature such as 40°C or higher. Therefore, it is preferable that a photocurable adhesive which can be hardened at room temperature be employed as the adhesive 701 in this embodiment in view of stability of biomolecules. The photocurable adhesive can be hardened within several seconds when a large amount of energy is applied. Accordingly, the photocurable adhesive can be suitably used in view of manufacturing efficiency (for example, high throughput and a decrease in misalignment of biochips BC at the time of fixation to a base member). For example, a thermosetting adhesive is hardened when it is placed at room temperature. Particularly, since an epoxy-based adhesive is a two-component adhesive, the hardening progresses at the time point at which the adhesive is mixed. On the other hand, it is possible to easily prevent the photocurable adhesive from being hardened by not applying light thereto. For example, when a UV-LED or the like is used as a light source, the light source has merits such as a long life span, a decrease in size, and energy saving.

When the photocurable adhesive is used, the plate CP is formed of a member (for example, a glass member or a resin member) transmitting light (hereinafter referred to as curing light) for curing the adhesive. Each support area 721 of the plate CP includes an adhesive application area and the biochips BC are mounted on the support areas 721 after the photocurable adhesive is applied to the application areas. For example, the biochips BC are fixed to the plate CP by applying curing light of a predetermined wavelength from the rear surface CPb side of the plate CP to harden the adhesive 701.

A first hole AL1 and a second hole AL2 for aligning the X and Y directions or the θ direction (for example, the θZ direction) of the plate CP in the stage ST are formed as alignment portions on both sides in the Y direction of the plate CP. The first hole AL1 and the second hole AL2 are formed in different shapes to have a predetermined relative positional relationship with the plurality of support areas 721. The first hole AL1 is formed as a through-hole having a circular shape in a plan view. The second hole AL2 has, for example, a different shape from the first hole AL1 and is formed as a through-hole having an elongated circular shape (for example, an elliptical shape) extending in the X direction (or the Y direction) in a plan view. The width of the short diameter side of the long circle of the second hole AL2 is equal to the diameter of the first hole AL1.

The biochip BC constitutes a biomolecule array in which a plurality of probes (spots) constructed by stacking a plurality of biomolecules (not illustrated) which can specifically react with targets included in a sample to be described later are formed on the first surface Ba of a substrate 702 having a rectangular shape in a plan view. The biochip BC is formed, for example, by individually dicing a silicon wafer after spots are formed on the silicon wafer. A probe is formed by stacking a plurality of biomolecules by repeatedly performing a step of arranging a predetermined biomolecule forming material on a silicon wafer and an exposure step of selectively irradiating the biomolecule forming material with light of a predetermined wavelength via a mask several times. The biomolecules formed in this way are combined with a sample by specifically reacting with the fluorescently labeled sample serving as a measurement target, and generate predetermined fluorescent light by irradiation with predetermined light (excitation light).

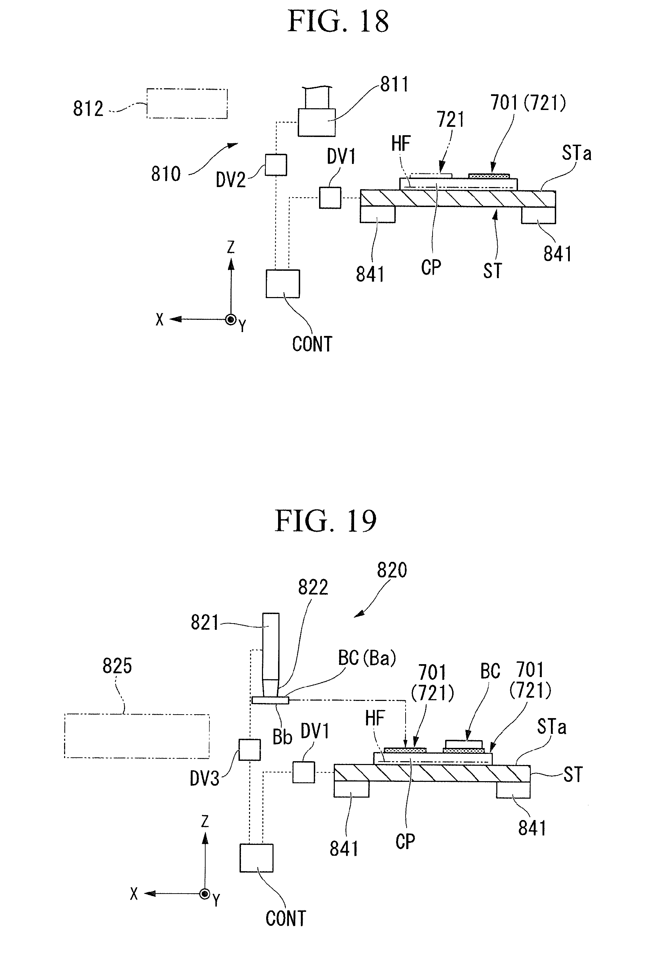

Fig. 18 is a cross-sectional view taken along line A-A in Fig. 15 (that is, a cross-sectional view of the supply unit 810) and Fig. 19 is a cross-sectional view taken along line B-B in Fig. 15 (that is, a cross-sectional view of the transfer unit 820).

The carrying unit 840 sequentially carries the plate CP to the supply unit 810 and the transfer unit 820 and is connected in an in-line manner to the supply unit 810 and the transfer unit 820. The carrying unit 840 includes a rail (guide portion) 841 and a stage ST as illustrated in Fig. 18. A pair of rails 841 are arranged with a gap in the X direction. The rails 841 are disposed to extend in the Y direction which is a direction in which the supply unit 810 and the transfer unit 820 are arranged.

The stage ST is disposed to be movable along the rails 841 by driving of the drive device DV1. The driving of the drive device DV1 is controlled by a control unit CONT. The surface on the +Z side of the stage ST includes a support surface STa that can support the plate CP on a predetermined arrangement surface HF on which the rear surface CPb of the plate CP is disposed. The arrangement surface HF in this embodiment is set to be substantially coplanar with the support surface STa. The stage ST includes a transmissive area (light-transmitting area) TA facing the support areas 721 of the plate CP at least in the XY plane when at least the plate CP is supported. The transmissive area TA is an area transmitting the curing light which is disposed to correspond to at least a part of the arrangement surface HF and is formed of a member (for example, a glass member) transmitting the curing light (the entire plate is formed of a glass member in this embodiment).

In the stage ST, alignment pins (alignment portions) 761 protrude at positions corresponding to the holes AL1 and AL2 of the plate CP. The outer circumferential surfaces of the alignment pins 761 are fitted into the first hole AL1 and the second hole AL2 of the plate CP to align the plate CP with the stage ST. Tapered portions serving as guides for fitting into the first hole AL1 and the second hole AL2 are formed at the tips of the alignment pins 761.

The supply unit 810 sequentially supplies the photocurable adhesive 701 to the support areas 721 of the plate CP and includes a storage tank 812 that stores the photocurable adhesive 701 and a supplier 811 that supplies the photocurable adhesive 701 stored in the storage tank 812 to the support areas 721 of the plate CP (or the second surface Bb of the biochip BC), as illustrated in Fig. 18. The supplier 811 can move at least in the X direction, the Y direction, the Z direction, and the θZ direction (the direction of rotation about an axis parallel to the Z axis) by driving of the drive device DV2 under the control of the control unit CONT. For the supply of the photocurable adhesive 701 to the support areas 721 of the plate CP (application means), a method of supplying liquid droplets containing the photocurable adhesive 701 to the plate CP in an ink jet manner or a method of supplying the photocurable adhesive 701 to the plate CP in a transfer manner is selected. When the photocurable adhesive 701 is supplied to the plate CP in an ink jet manner, for example, an ink tank is used as the storage tank 812 and an ejection head is used as the supplier 811. When the photocurable adhesive 701 is supplied to the plate CP in the transfer manner, for example, a saucer-shaped member is used as the storage tank 812 and a transferrer is used as the supplier 811.

The transfer unit 820 transfers the biochips BC to the support areas 721 of the plate CP to which the photocurable adhesive 701 is supplied and includes a manipulator 821 and a dicing unit 825 (see Fig. 15) as illustrated in Fig. 19. The manipulator 821 moves in the direction parallel to the XY plane and in the Z direction, for example, in a state in which a posture extending in the Z direction is maintained by driving of the drive device DV3 under the control of the control unit CONT. The manipulator 821 is configured to switch suction support and support release of the biochips BC in the nozzle 822 by switching the tip nozzle 822 between activation and deactivation of negative-pressure suction under the control of the control unit CONT.

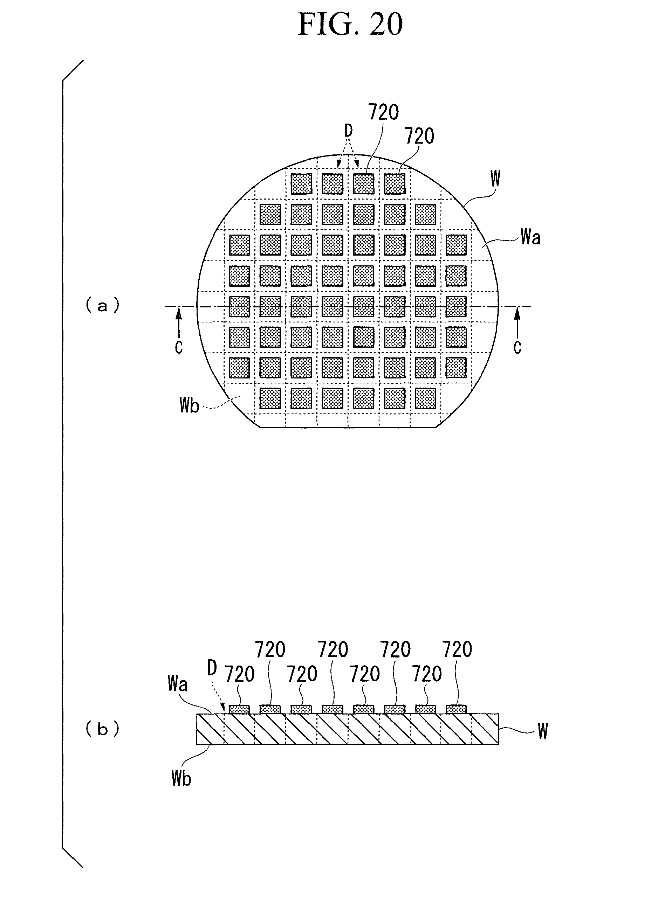

For example, as illustrated in Fig. 20, the dicing unit 825 dices (cuts) a silicon wafer (wafer) W provided together with a plurality of biochips BC into individual biochips BC. Fig. 20(a) is a plan view of the silicon wafer and Fig. 20(b) is a cross-sectional view taken along line C-C in Fig. 20(a).

The silicon wafer W includes a first surface Wa and a second surface Wb formed on the side opposite to the first surface Wa. On the first surface Wa of the silicon wafer

W, biomolecule portions 720 in which a plurality of biomolecules are patterned are disposed in the respective sections D which are partitioned in a matrix shape. The plurality of biomolecules are biomolecules which are a basic material constituting a biological body and are arranged in a plurality of areas (spots) in the biomolecule portions 720.

For example, in this patterning, a step of arranging a predetermined biomolecule forming material onto the silicon wafer W and a step of selectively irradiating the biomolecule forming material with light of a predetermined wavelength via a mask are repeatedly performed several times. Accordingly, as illustrated in Fig. 20, the biomolecule portions 720 in which a plurality of biomolecules are stacked in a plurality of areas (spots) are formed in the sections D.

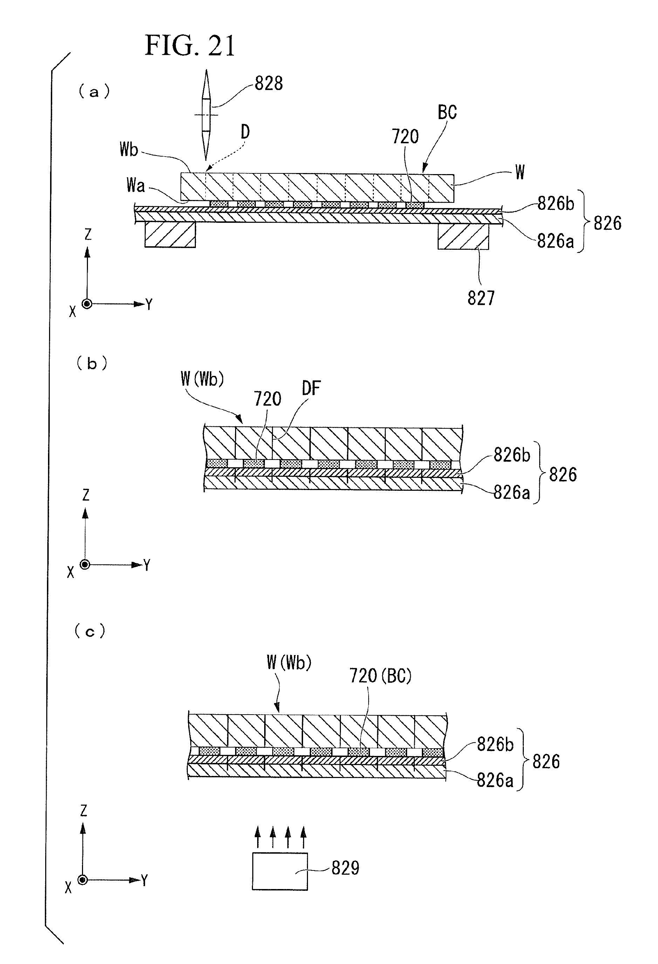

As illustrated in Fig. 21(a), the dicing unit 825 includes a guide member (sheet support portion) 827 that supports (holds) a dicing film (support sheet) 826 that supports the individually cut biomolecule portions 720 and the silicon wafer W (that is, the biochips BC), a dicing saw 828 that dices (cuts) the silicon wafer W, and a second irradiation unit 829 (see Fig. 21(c)).

The dicing film 826 includes a base film 826a and an adhesive layer 826b disposed on the base film 826a. The base film 826a contains a material of which adhesiveness decreases by irradiation with second light of a specific wavelength band (for example, UV light). The second irradiation unit 829 irradiates the dicing film 826 with second light and is disposed in the vicinity of an unloading section of the biochips BC by the manipulator 821. The dicing saw 828 is disposed on the opposite side of the guide member 827 with the silicon wafer W interposed therebetween.

As illustrated in Fig. 17 and the like, the irradiation unit 830 applies curing light (for example, UV light) of the photocurable adhesive 701 to the stage ST located thereabove (for example, on the +Z side). As illustrated in Fig. 16, the irradiation unit 830 has a light irradiation area (irradiation position) which extends in a line shape in the X direction, which is wider than the arrangement range in the X direction of the support areas 721 of the plate CP, and which is located on the +Y side of the position in the Y direction of the support area 721 in transferring of the biochip BC to the plate CP in the transfer unit 820 as illustrated in Fig. 17. As illustrated in Figs. 16 and 17, the irradiation unit 830 is disposed on the -Z side of the rails 841 between the pair of rails 841. For example, the irradiation unit 830 is disposed on the +Y side of the position of the unhardened photocurable adhesive 701 supplied to the in-line plate CP and on the -Z side in a moving path of the stage ST. The irradiation unit 830 is disposed to apply a line shape of curing light for hardening the photocurable adhesive 701 upward (for example, in the +Z direction). The stage ST in this embodiment is movable relative to the irradiation unit 830. For example, a plurality of LEDs which are arranged in the X direction can be used as the light source for hardening the photocurable adhesive 701. For example, as illustrated in Fig. 17, the irradiation unit 830 is disposed below the carrying unit 7140 (for example, below the stage ST having the transmissive area TA (for example, the -Z side) or below the pair of rails 841) and can irradiate the transmissive area TA or the arrangement surface HF on which the plate CP is arranged with curing light from below the stage ST. For example, when the in-line plate CP is carried to a predetermined position (for example, the irradiation position of the irradiation unit 830, the transmissive area TA, or the arrangement surface HF), the irradiation unit 830 irradiates the photocurable adhesive 701, which has been supplied to the support areas 721 of the plate CP or the second surface Bb of the biochips BC, with curing light to harden the photocurable adhesive 701 disposed on the transmissive area TA or the arrangement surface HF. The irradiation unit 830 can apply curing light from the surface (rear surface CPb) opposite to the surface of the support areas 721 out of the end surfaces (the front surface CPa and the rear surface CPb) of the plate CP, and includes an irradiation area having a size corresponding to the transmissive area TA or the arrangement surface HF.

The operation of mounting biochips BC on the plate CP using the mounting device MT having the above-mentioned configuration will be described below.

First, a substrate feeding step of feeding the biochips BC to the plate CP in the dicing unit 825 will be described below.

As illustrated in Fig. 21(a), the mounting device MT bonds the silicon wafer W to the dicing film 826, which has been mounted on the guide member (sheet support portion) 827 in a state in which the adhesive layer 826b of the dicing film 826 faces the +Z side (the biomolecule portion 720 side) and predetermined tension is applied to the dicing film 826, to bond the biomolecule portions 720 to the dicing film 826.

Then, the mounting device MT cuts the silicon wafer W using the dicing saw 828 as illustrated in Fig. 21(b). The cutting of the silicon wafer W is performed along the sections D formed on the second surface Wb while supporting the dicing film 826 with the guide members 827. In the cutting of the silicon wafer W, a part of the surface (+Z side) of the dicing film 826 is cut, the bottom side (-Z side) of the dicing film 826 is not cut, and the bottom side remains. Accordingly, the silicon wafer W is diced with cutting surfaces DF in a state in which the silicon wafer is supported by the dicing film 826.

After the silicon wafer W is cut, processes of cleaning and drying the silicon wafer W are performed to remove foreign matter and the like generated at the time of cutting. It is preferable that the cleaning and drying processes be performed in a state in which the biomolecule portions 720 are covered with the dicing film 826.

As illustrated in Fig. 21(c), the mounting device MT irradiates the dicing film 826 with second light from the second irradiation unit 829 to decrease the adhesiveness of the adhesive layer 826b. Accordingly, the dicing film 826 can be peeled off from the silicon wafer W. A plurality of biochips BC bound as a unified body by the dicing film 826 are fed to the plate CP in an individually cut state in a state in which the biomolecule portions 720 are directed upward (in the +Z direction) after the biochips are peeled off from the dicing film 826 and are inverted by the manipulator 821.

A sequence of fixing (mounting) biochips BC to the plate CP will be described below with reference to Figs. 15 to 19 and Fig. 22.

First, as illustrated in Fig. 15, the mounting device MT supports the plate CP on the stage ST at a position (for example, a position before the supply unit 810) before the stage ST reaches the supply unit 810. At this time, as illustrated in Figs. 16 and 17, the plate CP is aligned with the stage ST by fitting the inner circumferential surface of the first hole AL1 over the outer circumferential surface of the alignment pin 761 and fitting the second hole AL2 over the outer circumferential surface of the alignment pin 761 in the facing surface in the width direction thereof. The plate CP is supported by the stage ST and the rear surface CPb thereof is arranged on the arrangement surface HF which is substantially coplanar with the support surface STa.

Subsequently, as illustrated in Fig. 18, the stage ST supporting the aligned plate CP moves to the supply unit 810 due to driving of the drive device DV1. In the supply unit 810, the supplier 811 illustrated in Fig. 18 moves due to driving of the drive device DV2 and sequentially supplies the photocurable adhesive 701 stored in the storage tank 812 to a plurality of support areas 721 on the plate CP (supply step). In an ink jet type, the supply of the photocurable adhesive 701 to the plate CP is performed by ejecting a predetermined amount of droplets containing the photocurable adhesive 701 to the support areas 721 from the ejection head. In a transfer type, the supply of the photocurable adhesive 701 to the plate CP is performed by transferring the photocurable adhesive 701 stored in the storage tank 812 to a transfer surface of the transferrer as the supplier 811 once and then transferring the photocurable adhesive 701 to the support areas 721.

When the photocurable adhesive 701 is supplied in the ink jet type, the photocurable adhesive 701 can be supplied in an arbitrary pattern for each support area 721 and an amount of photocurable adhesive supplied can be appropriately changed. When the photocurable adhesive 701 is supplied in the transfer type, a flat adhesive layer with a small thickness can be easily formed, for example, using a low-viscosity photocurable adhesive 701 as the photocurable adhesive 701.

After the supply of the photocurable adhesive 701 is completed in the supply unit 810, the stage ST on which the plate CP is supported moves to a transfer position of the transfer unit 820 due to driving of the drive device DV1. As illustrated in Fig. 19, the biochips BC are transferred to the support areas 721 of the plate CP to which the photocurable adhesive 701 is supplied by the transfer unit 820 (transfer step). For example, the manipulator 821 illustrated in Fig. 19 moves due to driving of the drive device DV3 and suctions and supports the biomolecule portions 720 of the biochips BC which have been individually cut by the dicing unit 825 with the nozzle 822. Then, the manipulator 821 transfers the biochips BC to the support areas 721 to which the photocurable adhesive 701 is supplied. Accordingly, each support area 721 comes in contact with the second surface Bb of the corresponding biochip BC with the photocurable adhesive 701 interposed therebetween.

When the biochips BC are suctioned and supported by the manipulator 821 or when the biochips BC are suctioned and supported and are moved to the plate CP by the manipulator 821, it is preferable that the substrate fixing device measure the relative positional relationship (an X relative position, a Y relative position, and a θZ relative position) of the biochip BC to the manipulator 821. Through this procedure, the substrate fixing device can align and support the biochip BC with the support area 721 of the plate CP.

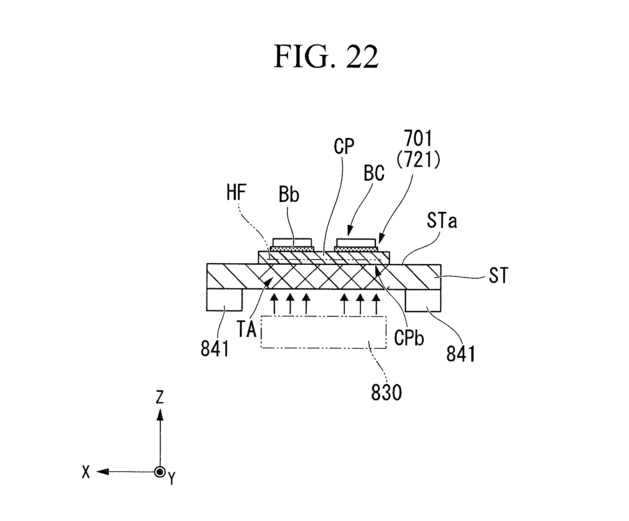

Subsequently, as illustrated in Fig. 22, after the transferring of the biochips BC to the plurality of support areas 721 is completed, the stage ST is moved to the irradiation position of the irradiation unit 830 located on the +Y side by driving of the drive device DV1.

The irradiation unit 830 is disposed below the irradiation position on the +Y side of the transfer position of the biochip BC, and the control unit CONT causes the irradiation unit 830 to emit curing light upward in synchronization with the movement of the stage ST to the irradiation position in the +Y direction. The emitted curing light sequentially passes through the transmissive area of the stage ST, the arrangement surface HF, and the plate PC and is applied to the second surface Bb of the biochip BC (irradiation step). Accordingly, the biochip BC is fixed to the plate CP by hardening of the photocurable adhesive 701.

When the photocurable adhesive 701 is fixed by irradiation with the curing light, there is a possibility of the position of the biochip BC relative to the plate CP varying when the stage ST is moved in a state in which the biochip BC is bonded to the unhardened photocurable adhesive 701. In order to satisfactorily harden the photocurable adhesive 701, the time for which the photocurable adhesive 701 is irradiated with light is extended and thus there is a possibility of fixing efficiency of the biochip BC to the plate CP using the carrying unit 840 decreasing. Accordingly, after the transferring of the biochip BC to the plate CP is completed, the control unit CONT may temporarily fix the biochip BC to the plate CP by performing a second irradiation step of irradiating the second surface Bb of the biochip BC with light of an amount of energy capable of temporarily fixing the biochip BC to the support area 721, and then may perform the above-mentioned irradiation step of main hardening of the photocurable adhesive 701. A configuration in which the light source in the second irradiation step includes an irradiation area capable of irradiating all the support areas 721 together to rapidly irradiate the second surface Bb with the curing light, a configuration in which a plurality of light sources disposed to correspond to the support areas 721 apply curing light in synchronization with the transferring of the biochips BC to the support areas 721, a configuration in which the irradiation unit 830 illustrated in Fig. 17 is disposed to be movable in the Y direction and the irradiation unit 830 is moved at a moving speed (scanning speed) at which the above-mentioned amount of energy is obtained after the biochips BC are transferred and before the stage ST is moved, or the like can be selectively used.

The plate CP to which the biochips BC are fixed by the photocurable adhesive 701 is subjected to a sealing step of sealing the plate with an envelope member or a sealing member, whereby it is possible to suppress attachment of foreign matter to the biomolecule portions 720 and thus to suppress a decrease in accuracy of measurement of biomolecule arrays which is performed in a subsequent process.

As described above, since the substrate fixing device (mounting device MT) according to this embodiment fixes the biochips BC to the plate CP using the photocurable adhesive 701, it is possible to suppress an influence of heat on the biomolecule portions 720. Accordingly, in this embodiment, it is possible to suppress a decrease in measurement accuracy of biomolecules due to an influence of heat. In this embodiment, since the curing light of the photocurable adhesive 701 is applied from below the stage ST, the photocurable adhesive 701 can be easily irradiated with the curing light even when the biochips BC are fixed to the plate CP in a state in which the biomolecule portions 720 are directed upward or when the substrate 702 of the biochip BC is formed of a member that does not transmit light. In the substrate fixing device (mounting device MT) according to this embodiment, by performing the second irradiation step of temporarily fixing the biochips BC to the support areas 721 after the transferring of the biochips BC to the plate CP is completed, it is possible to avoid problems such as positional displacement of the biochips BC due to movement of the stage ST before the photocurable adhesive 701 is hardened or a decrease in fixing efficiency of the biochips BC due to extension of the irradiation time of the curing light.

In the dicing device 825 (mounting device MT) according to this embodiment, since the dicing film 826 is bonded to the biomolecule portions 720 to cover the biomolecule portions 720 when the biochips BC are fed into the dicing unit 825, it is possible to prevent the measurement accuracy of biomolecules from being adversely affected by attachment of foreign matter generated after cutting the silicon wafer W to the biomolecule portions 720. In the mounting device MT according to this embodiment, since the dicing film 826 can be peeled off from the biochips BC by irradiation with second light, it is possible to suppress an influence of heat on the biomolecule portions 720 when the dicing film 826 is peeled off. Since the mounting device MT according to this embodiment can continuously fix the biochips BC to the plate CP using the carrying unit 840 connected in an in-line manner to the supply unit 810 and the transfer unit 820, it is possible to efficiently mount the biochips BC on the plate CP.

### (Fifth embodiment)

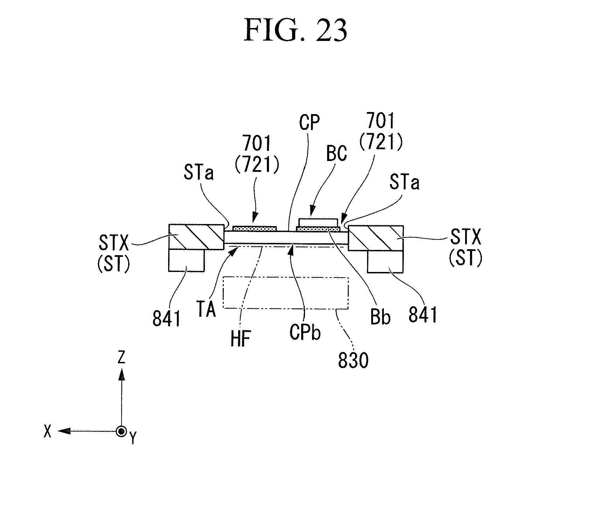

Fig. 23 is a diagram schematically illustrating a configuration of a mounting device MT (substrate fixing device) according to a fifth embodiment.

In this drawing, the same elements as those of the fourth embodiment illustrated in Figs. 15 to 22 will be referenced by the same reference signs and description thereof will not be repeated.

The fifth embodiment is different from the fourth embodiment in the configuration of the stage ST.

As illustrated in Fig. 23, the stage ST includes stage structures STX which are separated in the X direction and which move along the rails 841 in cooperation with each other. The stage structures STX include support faces STa which face each other with a gap in the X direction, which pinch the side faces of the plate CP therebetween, and which are parallel to the YZ plane. When the plate CP is supported between the support faces STa, the stage structures STX match the rear surface CPb of the plate CP with the arrangement surface HF parallel to the XY plane. The stage ST includes a transmission area TA transmitting the curing light in an area including the arrangement surface HF. The transmissive area in Fig. 23 is an opening of the stage ST which transmits the curing light.

In the mounting device MT having the above-mentioned configuration, in addition to the same operational advantages as in the fourth embodiment, the curing light passes through the gap (opening) between the stage structures STX as the transmissive area and is then applied to the second surface Bb of the biochip BC through the plate CP. Accordingly, in this embodiment, the second surface Bb can be irradiated with the curing light with reduced loss of irradiation energy and it is thus possible to reduce an amount of energy required for hardening the photocurable adhesive 1. Alternatively, it is possible to harden the photocurable adhesive 1 in a short time. For example, when a space in the Z direction in which a light source of the irradiation unit 830 is arranged cannot be secured below the stage ST, the irradiation unit 830 may be configured to deflect the curing light by arranging an optical member such as a reflective mirror in an optical path from the light source to the transmissive area TA or the arrangement surface HF.

### (Screening device)

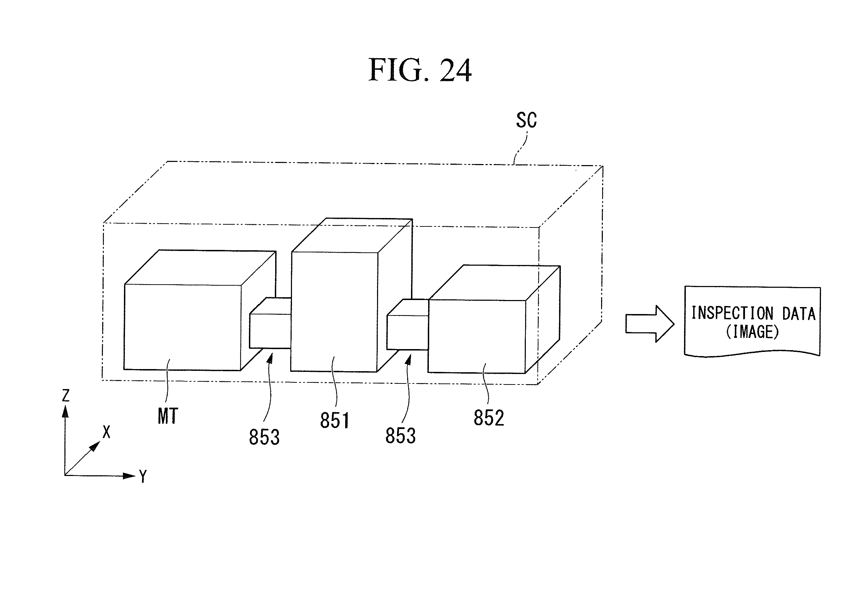

A screening device SC including the mounting device MT will be described below with reference to Figs. 24 to 27.

Fig. 24 is a diagram schematically illustrating the screening device SC.

The screening device SC includes the above-mentioned mounting device MT, a dispensing device 851, a measuring device 852, and a carrying device 853.

As illustrated in Fig. 24, an inspection package PG in which a well plate WP having wells partitioned for the biochips BC is incorporated into the plate CP to which the biochips BC are fixed by the above-mentioned mounting device MT is carried to the dispensing device 851 via the carrying device 853.

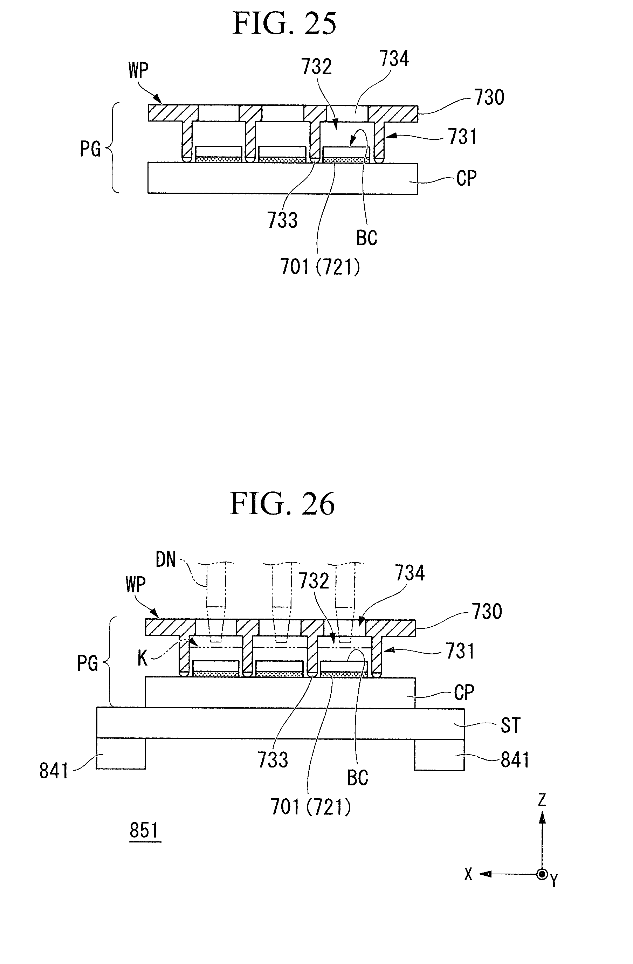

As illustrated in Fig. 25, the well plate WP includes a support 730 having a flat panel shape and partition walls 731 that protrude from the support 730 to the plate CP to form partitioned wells 732 in cooperation with the plate CP. Sealing portions 733 formed of an elastic material to seal the wells 732 are interposed between the ends of the partition walls 732 and the plate CP. Openings 734 for dispensing a sample K to the wells 732 are disposed in the support 730.

The carrying device 853 has a configuration in which the above-mentioned rails 841 disposed to penetrate the dispensing device 851 and the measuring device 852 and the stage ST movable along the rails 841 are connected in an in-line manner to the dispensing device 851 and the measuring device 852.

As illustrated in Fig. 26, the dispensing device 851 includes dispensing nozzles DN that dispense the sample K to the wells 732 via the openings 734. For the dispensing nozzle DN, one of a configuration in which a single dispensing nozzle is moved to each well 732 to dispense the sample K thereto, a configuration in which the dispensing nozzle DN is disposed in each well 732 and the sample K is simultaneously dispensed to all the wells 732, a configuration in which a plurality of dispensing nozzles DN are arranged in a line shape in a direction perpendicular to the moving direction of the stage ST and the sample K is dispensed to the wells 732 for each line in synchronization with movement of the stage ST, and the like can be selected. After the sample K is dispensed to the wells 732 of the inspection package PG, which has been carried to the dispensing device 851 while supported by the stage ST, in the dispensing device 851 (after the dispensing step), reaction of biomolecules with fluorescently labeled targets contained in the sample K may be promoted, for example, by causing the stage ST to reciprocate in a predetermined direction in a minute stroke to agitate the sample K.

After the reaction of biomolecules with targets contained in the sample K for a predetermined time is completed, the dispensing device 851 performs a cleaning process on the biochips BC subjected to the reaction. The cleaning process is performed, for example, by supplying a cleaning liquid to the wells 732 from a cleaning nozzle (not illustrated). Similarly to the dispensing nozzles DN, for the cleaning nozzle, one of a configuration in which a single cleaning nozzle is moved to each well 732 to supply the cleaning liquid thereto, a configuration in which the cleaning nozzle is disposed in each well 732 and the cleaning liquid is simultaneously supplied to all the wells 732, a configuration in which a plurality of cleaning nozzles are arranged in a line shape in a direction perpendicular to the moving direction of the stage ST and the cleaning liquid is supplied to the wells 732 for each line in synchronization with movement of the stage ST, and the like can be selected. When the cleaning process on the biochips BC is completed, the dispensing device 851 performs a drying process of drying the cleaning liquid attached to the biochips BC using a blower or the like.

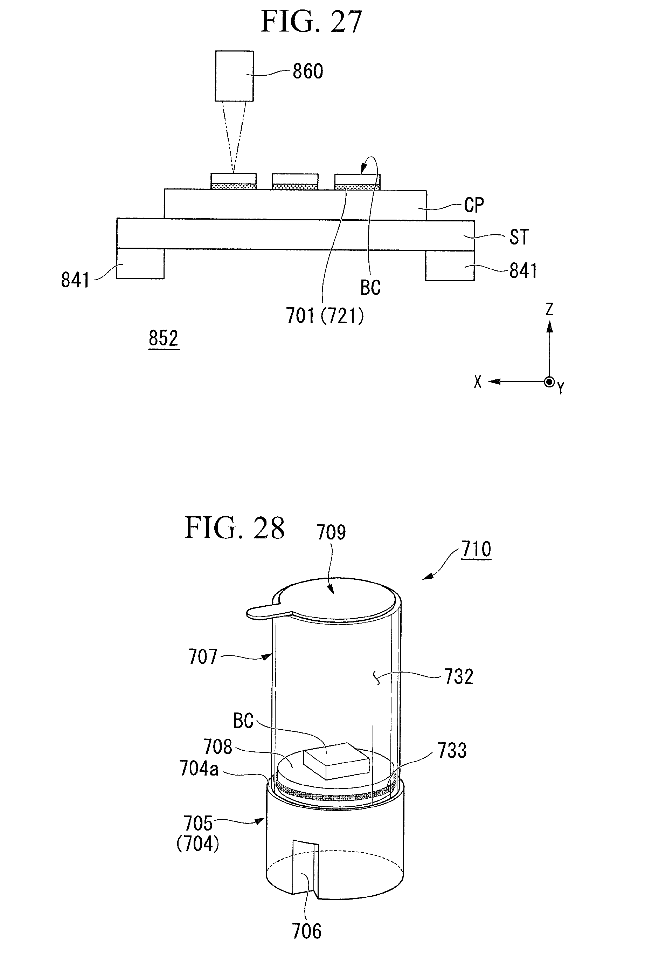

After the cleaning and drying processes on the biochips BC are completed, the screening device SC separates the well plate WP of the inspection package PG and carries the plate CP to which the biochips BC are fixed to the measuring device 852 by moving the stage ST. As illustrated in Fig. 27, the measuring device 852 includes an imaging device 860 capable of observing biomolecules of the biochips BC. The imaging device 860 includes a light source, an optical system having an objective lens, and a CCD camera and is disposed on the +Z side of (above) the stage ST. An identification information signal generated by the imaging device 860 is output to the control unit CONT.

The measuring device 852 sequentially performs focusing of the imaging device 860 and imaging of biomolecules on the carried plate CP. When the viewing field of the imaging device 860 is narrower than the arrangement area of a plurality of biomolecules (a plurality of biomolecule portions 720), the control unit CONT performs regular movement of the stage ST and imaging of the arrangement area of the biomolecules 751 as a series of operations multiple times to measure all the arrangement areas of the plurality of biomolecules. The control unit CONT synthesizes a plurality of imaging results acquired through this series of operations to generate a measurement result and detects affinities of the biomolecules with the targets (for example, reactivity or connectivity based on generation of fluorescent light or intensity of fluorescent light) as inspection data of image information based on the measurement result.

In this way, since the measuring device 852 in this embodiment measures the biochips BC fixed to the plate CP using the fixing method described in the above-mentioned embodiments, it is possible to suppress a decrease in measurement accuracy due to an influence of heat and thus to obtain a more accurate measurement result. Since the screening device SC according to this embodiment carries the plate CP having biochips BC fixed thereto using the carrying device 853 connected in an in-line manner to the mounting device MT, the dispensing device 851, and the measuring device 852, it is possible to continuously perform fixing of the biochips BC to the plate CP, dispensing of the sample K, and measuring of biomolecules and thus to achieve improvement in screening efficiency.

### (Another embodiment of screening device)

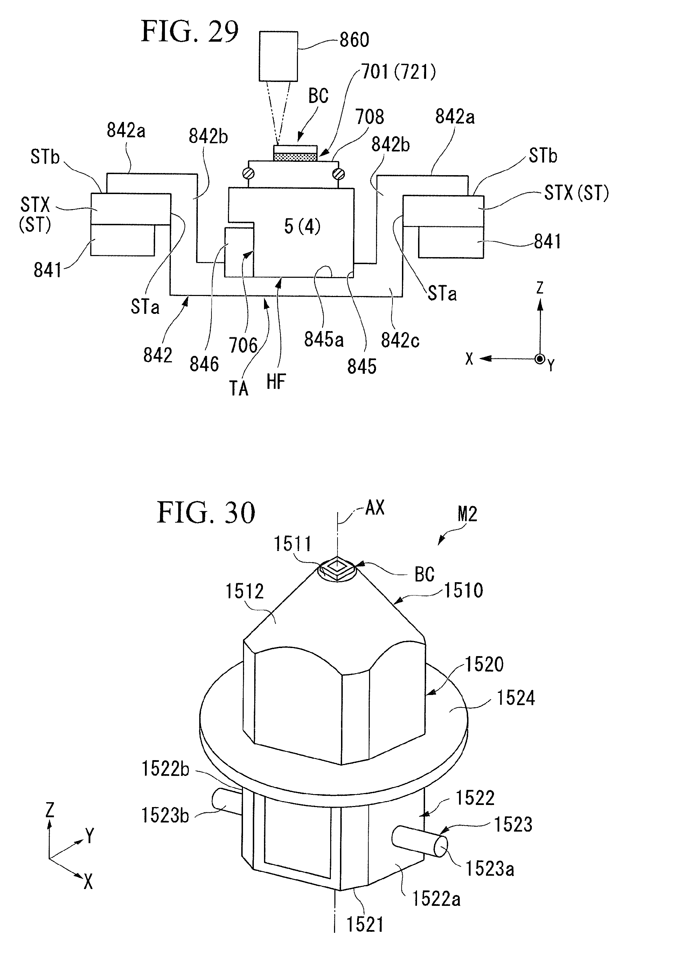

Another embodiment of the screening device SC will be described below with reference to Figs. 28 and 29. In the drawings, the same elements as the elements of the screening device SC illustrated in Figs. 24 to 27 will be referenced by the same reference signs and description thereof will not be repeated.

In the substrate fixing method, the mounting device MT, and the screening device SC which have been described above, a configuration in which biochips BC are fixed to a plate CP having a flat panel shape was illustrated, but a configuration in which a single biochip BC is fixed to a single long base member will be described in this embodiment.

Fig. 28 is a perspective view illustrating an appearance of a capsule (inspection package) 710 for dispensation and measurement by which a biochip BC is supported.

The capsule 710 is formed of a member transmitting light, and includes a body section (base member) 705 that supports a biochip BC and a sample accommodating section 707 that is attachable to and detachable from the body section 705 and that forms a well 732 in which a sample is accommodated between the body section 705 and the sample accommodating section 707 at the time of attachment. An opening (not illustrated) for dispensing a sample to the well 732 is formed on the top of the sample accommodating section 707. The opening is covered with a seal (cover member) 709. The capsule 710 according to this embodiment has a capsule structure in which the well 732 for accommodating a sample is formed by attaching the body section 705 and the sample accommodating section 707 to each other. The well 732 is sealed by a sealing portion 733 interposed between the body section 705 and the sample accommodating section 707.

The body section 705 includes a base 704 and a pedestal 708 that is formed of a member transmitting light and that protrudes from the top surface 704a of the base 4. As illustrated in Fig. 29, the pedestal 708 includes a support area 721 supporting a biochip BC. The biochip BC is fixed to the base 704 with the photocurable adhesive 701 supplied to the support area 721 using the above-mentioned substrate fixing method. A groove (alignment portion) 706 is formed in the height direction of the base 704 in a part of the outer circumferential surface of the base 704. The groove 706 is an alignment notch which is used for alignment in the circumferential direction about a vertical axis passing through the center of the base 704. The groove 706 is also used for alignment in the direction of rotation with respect to a measuring device when micromolecules are measured.

In the capsule 710 having the above-mentioned configuration, the supply of the photocurable adhesive 701 to the body section 705, the fixation of the biochip BC, and the measurement of biomolecules after the reaction with a sample are performed in a state in which the sample accommodating section 707 is detached from the body section 705. However, when the plate CP having a flat panel shape illustrated in Fig. 17 is used and the position of the support area 721 and the position of the biochip BC (biomolecules) vary in the Z direction, it is necessary to change the supply position of the photocurable adhesive 701 by the supplier 811, the transferring position of the biochip BC by the manipulator 821, the focal position of the imaging device 860, and the like in the Z direction.

Accordingly, in the screening device SC according to this embodiment, as illustrated in Fig. 29, the stage ST carries the body section 705 via a carrier (adjustment member) 842 transmitting light in order to adjust the position of the body section 705 (support area 721) in the Z direction. The number of body sections 705 (capsules 710) to be carried by the carrier 842 is not particularly limited, and it is assumed for the purpose of easy understanding that one body section 705 (capsule 710) is carried in this embodiment. The stage ST in this embodiment includes stage structures STX that are separated in the X direction and that move along the rails 841 in cooperation with each other, similarly to the fifth embodiment illustrated in Fig. 23.

The carrier 842 includes a support portion 842a that is supported on a support surface STb on the +Z side of each stage structure STX, a side portion 842b that extends to the -Z side from the inner end of the support portion 842a and that is supported on a support surface STa of each stage structure STX, and a bottom portion 842c that is disposed in parallel to the XY plane to connect the ends on the -Z side of the side portions 842b.

The bottom portion 842c includes a concave portion 845 that transmits light and that is fitted to the bottom of the body section 705 (base 704) and a shaft 846 that is fitted to the groove 706 of the body section 705. The bottom surface 845a of the concave portion 845 is the arrangement surface HF of the body section 705 when the body section 705 is fitted to the concave portion 845. The length of the side portion 842b in the Z direction, that is, the position of the bottom portion 842c in the Z direction, is set to a value at which a predetermined position of the body section 705 is a predetermined position in the Z direction. For example, the length of the side portion 842b in the Z direction is set such that the position of the pedestal 708 (that is, the support area 721, more specifically, the biomolecules and the biochip BC) in the Z direction is equal to the position of the support area 721, more specifically, the biomolecules and the biochip BC, in the Z direction illustrated in Fig. 17.

In the capsule 710 having the above-mentioned configuration, after the photocurable adhesive 701 is supplied to the pedestal 708 in a state in which the sample accommodating section 707 is detached from the body section 705, the biochip BC is transferred to the support area 721 of the pedestal 708 and is fixed thereto by curing light. After the sample accommodating section 707 is attached to the body section 705 to which the biochip BC is fixed, the dispensing device 851 dispenses a sample to the well 732 to cause a reaction process. When the reaction process is completed, the screening device SC carries the capsule to the measuring device 852 in a state in which the sample accommodating section 707 is detached from the body section 705 and biomolecules are measured by the measuring device 860.

In the screening device SC according to this embodiment, it is possible to adjust the position of the base member in the Z direction (the position of the body section 705 in the Z direction) using the carrier 842 corresponding to the base member even when the base member supporting the biochip BC has a different configuration. Accordingly, the mounting device MT in this embodiment does not need to change the supply position of the photocurable adhesive 701 by the supplier 811, the transferring position of the biochip BC by the manipulator 821, the focal position of the imaging device 860, and the like and it is thus possible to shorten the time required for measuring biomolecules.

### (Another embodiment of screening device)

Another embodiment of the screening device SC will be described below with reference to Figs. 30 to 32. In the drawings, the same elements as in the screening device SC illustrated in Figs. 28 and 29 will be referenced by the same reference signs and description thereof will not be repeated.

In this embodiment, as illustrated in Fig. 30, the base member supporting a biochip BC includes, for example, a cube M2 that is formed of a member transmitting light and that includes a support section 1510 having a profile of a truncated cone shape and a handling section 1520 having a profile of a polygonal shape. The support section 1510 and the handling section 1520 transmit light and have a common central axis AX parallel to the height direction.

The support section 1510 includes a circular support surface (support area) 1511 and a side surface 1512 extending in the -Z direction from the outer edge (for example, the outer circumference) of the support surface 1511 to the handling section 1520. The support surface 1511 is a surface supporting the biochip BC and is parallel to the XY plane. The biochip BC is fixed to the support surface 1511 using the above-mentioned substrate fixing method. The support surface 1511 is formed flat over substantially the entire surface and has an area larger than that of the biochip BC. The side surface 1512 of the support section 1510 is tilted at a predetermined tilt angle to gradually approach the central axis AX from the side surface 1522 of the handling section 1520 to the support surface 1511 of the support section 1510 (in the +Z direction). Accordingly, the support section 1510 decreases in thickness from the handling section 1520 to the support surface 1511 (in the +Z direction). For example, the support section 1510 gradually increases in thickness from the support surface 1511 to the handling section 1520 (in the -Z direction). At the junction of the support section 1510 and the handling section 1520, the thickness of the support section 1510 and the thickness of the handling section 1520 are equal to each other. Accordingly, the support section 1510 and the handling section 1520 are connected to each other without forming a stepped portion. At the junction of the support section 1510 and the handling section 1520, the thickness of the support section 1510 and the thickness of the handling section 1520 may be different from each other and thus a stepped portion may be formed between the support section 1510 and the handling section 1520.

The handling section 1520 is formed such that an area of a cross-section in the XY plane is larger than the area of the support surface 1511. The handling section 1520 includes a bottom surface 1521 and a side surface 1522 extending in the +Z direction from the outer circumference of the bottom surface 1521 to the support section 1510. The bottom surface 1521 is formed, for example, in an octagonal shape and is parallel to the support surface 1511 (the XY plane). The bottom surface 1521 is formed flat over almost the entire surface.

The handling section 1520 is provided with a protruding portion 1523 and a flange portion 1524.

The protruding portion 1523 includes a first protruding portion 1523a disposed on a first surface 1522a on the +X side of the side surface 1522 and a second protruding portion 1523b disposed on a second surface 1522b on the -X side. The first surface 1522a and the second surface 1522b are parallel to the YZ plane and have the same shape when viewed in the X axis direction and the same sizes in the Y axis direction and the Z axis direction. The flange portion 1524 is disposed between the protruding portion 1523 and the support section 1510 in the Z direction. The bottom surface 1521, the side surface 1522, the protruding portion 1523, and the flange portion 1524 of the handling section 1520 are formed as a connection portion capable of being connected to an external device.

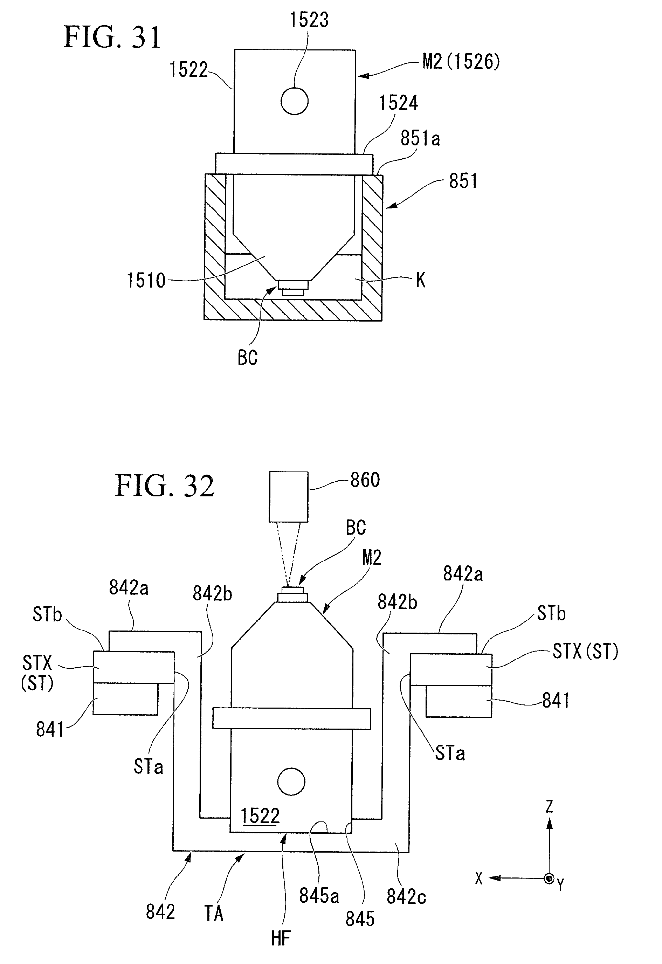

The cube M2 having the above-mentioned configuration is supported by the protruding portion 1523 and is carried to the dispensing device 851 as illustrated in Fig. 31. The dispensing device 851 is formed in a tubular shape that is opened upward and that includes an opening having a diameter larger than the diameter of the support section 1510 and smaller than the diameter of the flange portion 1524. The depth from the top end 851a to the bottom of the dispensing device 851 is set to be larger than the distance from the flange portion 1524 to the tip of the biochip BC such that the biochip BC does not come in contact with the bottom of the dispensing device 851 when the flange portion 1524 engages with the top end 851 a.

In the carrier 842 which is used to carry the cube M2 having the above-mentioned configuration, as illustrated in Fig. 32, the length of the side portion 842b in the Z direction is set such that the position of the biomolecules and the biochip BC in the Z direction is the same as the position of the support area 721 illustrated in Fig. 17, more specifically, the biomolecules and the biochip BC, in the Z direction.

Accordingly, since the carrier 842 corresponding to the cube M2 serving as a base member is used in the mounting device MT in this embodiment, it is not necessary to change the supply position of the photocurable adhesive 701 by the supplier 811, the transferring position of the biochip BC by the manipulator 821, the focal position of the imaging device 860, and the like and it is thus possible to shorten the time required for measuring biomolecules.

### (Another embodiment of mounting device MT)

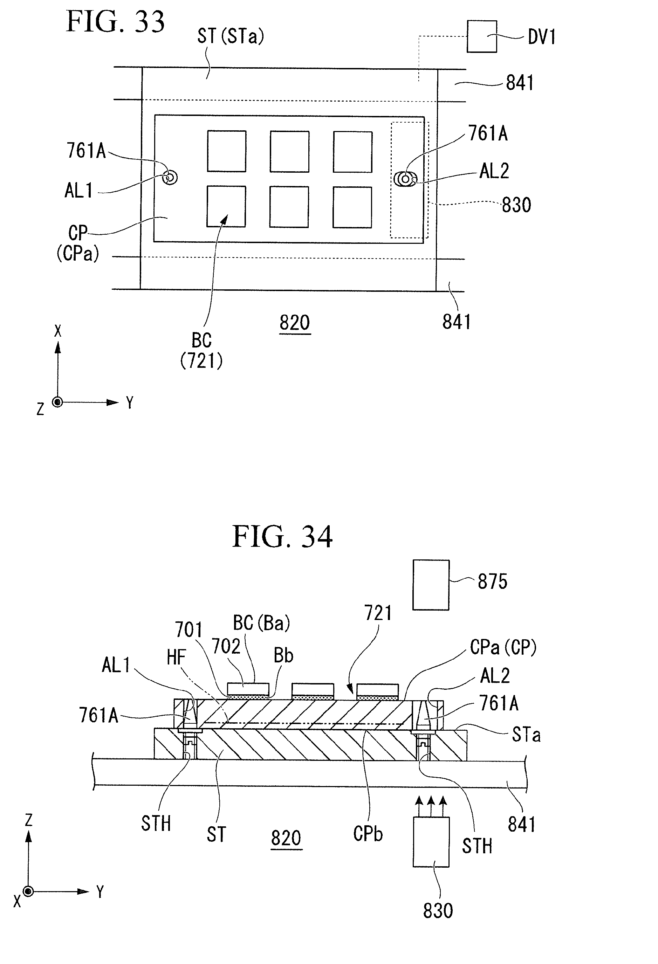

Another embodiment of the mounting device MT will be described below with reference to Figs. 33 to 36. In the drawings, the same elements as in the fourth embodiment illustrated in Figs. 15 and 22 will be referenced by the same reference signs and description thereof will not be repeated.

As illustrated in Fig. 33, the second hole AL2 of the plate CP in this embodiment is formed to extend in the Y direction. The central axis of the first hole AL1 is located in an extension of the central axis in the width direction of the second hole AL2.

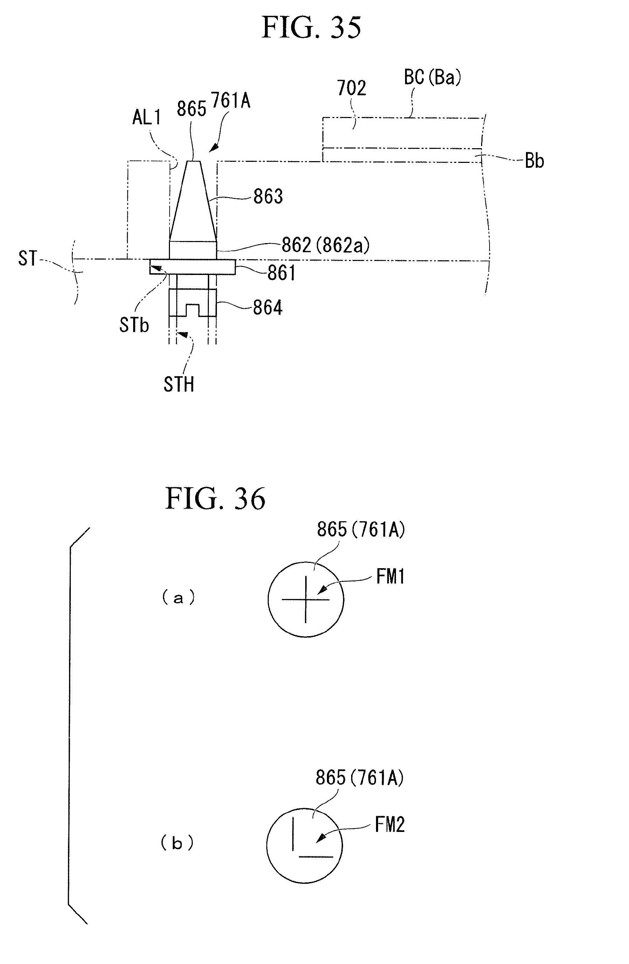

As illustrated in Figs. 33 and 34, in the stage ST, alignment pins (alignment portions) 761A protrude at positions facing the first hole AL1 and the second hole AL2 of the plate CP. Fig. 35 is an enlarged view of one of the alignment pins 761A and the first hole AL1. As illustrated in Fig. 35, the alignment pin 761A includes a base portion 861, a fitting portion 862, a taper portion 863, and a male screw portion 864.

The male screw portion 864 is screwed to a female screw portion STH formed in the stage ST (see Figs. 34 and 35). The base portion 861 is formed in a disc shape having a diameter larger than that of the male screw portion 864. The thickness of the base portion 861 is set to a value at which the base portion 861 does not protrude from the front surface STa when it is supported in a recess STb formed on the front surface STa of the stage ST. The fitting portion 862 is formed in a cylindrical shape. The fitting portion 862 has an outer circumferential surface 862a that is fitted into the first hole AL1 or the second AL2 (the second hole AL2 is not illustrated in Fig. 35). The range in which the outer circumferential surface 862a of the fitting portion 862 is fitted into the first hole AL1 or the second hole AL2 of the plate CP is a part of the base portion 861 in the thickness direction of the plate CP. The taper portion 863 is formed in a truncated cone shape in which the diameter gradually decreases from the fitting portion 862 to a top face 865. The height (position in the Z direction) of the top face 865 is set to a position (first position) at which the top face is coplanar with the front surface CPa of the plate CP. That is, the top face 865 of the alignment pin 761A and the top surface (CPa) of the plate CP are disposed to be substantially coplanar with each other. The height position (position in the Z direction) of the top face 865 of the alignment pin 761A is substantially equal to the height position of the surface (CPa, chip-mounting surface, mounting surface) on which the biochip BC is mounted in the plate CP.

An operation of mounting the plate CP on the stage ST in the mounting device MT having the above-mentioned configuration will be described below.

When the plate CP is mounted on the stage ST, the plate CP is aligned with the stage ST by fitting the outer circumferential surface 862a of the alignment pin 761A into the inner circumferential surface of the first hole AL1 of the plate CP and fitting opposite faces in the width direction of the second hole AL2 over the outer circumferential surface of the alignment pin 761. When the alignment pins 761A are inserted into the first hole AL1 and the second hole AL2 of the plate CP, the alignment pins 761A are smoothly inserted into the first hole AL1 and the second hole AL2 by guidance of the taper portion 863. The central axis of the first hole AL1 is located on the extension of the central axis in the width direction of the second hole AL2. Accordingly, even when the distance between two alignment pins 761A varies within a predetermined value, the alignment pins 761A can be inserted into the first hole AL1 and the second hole AL2.

After the plate CP is aligned with and mounted on the stage ST, the process of transferring the biochip BC to the plate CP, the process of hardening the photocurable adhesive, the process of causing the biomolecules of the biochip BC to react with targets included in the sample, the process of cleaning the biochip BC, and the process of drying the biochip BC are sequentially carried out as described above, and then the biomolecules are measured in the measuring device 852.

When the biochip BC is mounted on the plate CP, the position/posture of the biochip BC relative to the plate CP can be controlled. In the position/posture control, a line (central line) on the stage ST passing through two alignment pins 761A separated can be used as a reference line. A degree of correction of a θZ position (θZ is a direction of rotation about an axis parallel to the Z axis) of the biochip BC can be calculated, for example, based on the reference line which is calculated from a captured image of the alignment pins 761A and an axis of the biochip BC which is calculated from a captured image of the biochip BC. The reference line can be measured by capturing an image of the alignment pins 761 using the imaging device 875.

In measuring the alignment pins 761A using the imaging device 875, first, the imaging device 875 is focused. The focusing is performed on the top face 865 of the alignment pin 761A. When the imaging device 875 is focused on the top face 865, the center position of the alignment point 761A can be calculated, for example, by performing measurement using the circular profile of the top face 865 as an index.

The mounting of the biochip BC on the plate CP is performed while capturing an image of the front surface CPa (chip-mounting surface) of the plate CP using the imaging device 875. At this time, the focusing is performed on the front surface CPa of the plate CP.

In this embodiment, since the top face 865 of the alignment pin 761A is substantially coplanar with the front surface CPa (chip-mounting surface) of the plate CP, the biochip BC can be mounted on the plate CP using the imaging device 875 in a state in which the focal position of the alignment pin 761A in measurement is substantially maintained. That is, the same imaging device 875 can be used in the measuring operation of the alignment pin 761A and the chip mounting operation. At least a part of the focusing operation of the imaging device 875 can be shared with the measuring operation of the alignment pin 761A and the chip mounting operation. This is advantageous for enhancement in focusing efficiency and a decrease in process time. Additionally and/or alternatively, the substantial focusing operation (for example, driving of a lens in the imaging device 875) can be skipped. That is, since the top face 865 of the alignment pin 761A and the front surface CPa (chip-mounting surface) of the plate CP are substantially coplanar with each other, the distance between the imaging device 875 and the imaging target in the imaging is substantially constant. As a result, the initially set focal position can be continuously used in the imaging device 875.

In the measuring device 852, the height of the alignment pin 761A can be set to be substantially coplanar with the front surface CPa (chip-mounting surface) of the plate CP. In the measuring device 852, after the position of the biomolecules on the stage ST is measured using the imaging device 860, the biomolecules at the measured position are imaged. In measuring the position of the biomolecules on the stage ST, for example, the alignment pin 761A fitted into the first hole AL1 is measured. In measuring the alignment pin 761A using the imaging device 860, first, the imaging device 860 is focused. The focusing is performed on the top face 865 of the alignment pin 761A. Since the center position of the alignment pin 761A on the stage ST, the center position of the first hole AL1, the position of the biochip BC (support area 721) on the plate CP, and the position of the biomolecules in the biochip BC are known, the position of the biomolecules on the stage ST is calculated by calculating the center position of the alignment pin 761A. Additionally and/or alternatively, the substantial focusing operation (for example, driving of a lens in the imaging device 860) can also be skipped in the measuring device 852. That is, since the top face 865 of the alignment pin 761A and the front surface CPa (chip-mounting surface) of the plate CP are substantially coplanar with each other, the initially set focal position can be continuously used in the imaging device 86.

Subsequent processes are the same as in the above-mentioned embodiments.

In a modification example, the top faces 865 of two alignment pins 761 A may be located to be coplanar with the biomolecule arrangement surface of the biochip BC. In this case, when the position of the biomolecules is calculated, the stage ST is moved such that the biomolecules enter the viewing field of the imaging device 860. Since the imaging device 860 is focused on the top face 865 in advance and the height (position in the Z direction) of the top face 865 is set to be coplanar with the first surface (biomolecule arrangement surface) Ba of the biochip BC mounted on the plate CP, the biomolecules in the viewing field of the imaging device 860 are located at the focal position of the imaging device 860. Accordingly, when the biomolecules are located in the viewing field of the imaging device 860 by movement of the stage ST, the biomolecules can be imaged at once by the imaging device 860.

In the above-mentioned embodiment, the center position of the alignment pin 761A is calculated by measuring the profile of the top face 865 as an index, but the present invention is not limited to this configuration. For example, a cross-shaped mark FM1 formed on the top face 865 may be measured as an index as illustrated in Fig. 36(a), or a substantially L-shaped mark FM2 with separated intersections which is formed on the top face 865 may be measured as an index.

The shape of the alignment pin 761A illustrated in Fig. 35 or the like is an example. The shape of the alignment pin 761A can be modified in various forms. The shapes of the stage ST and the plate CP can also be modified in various forms.

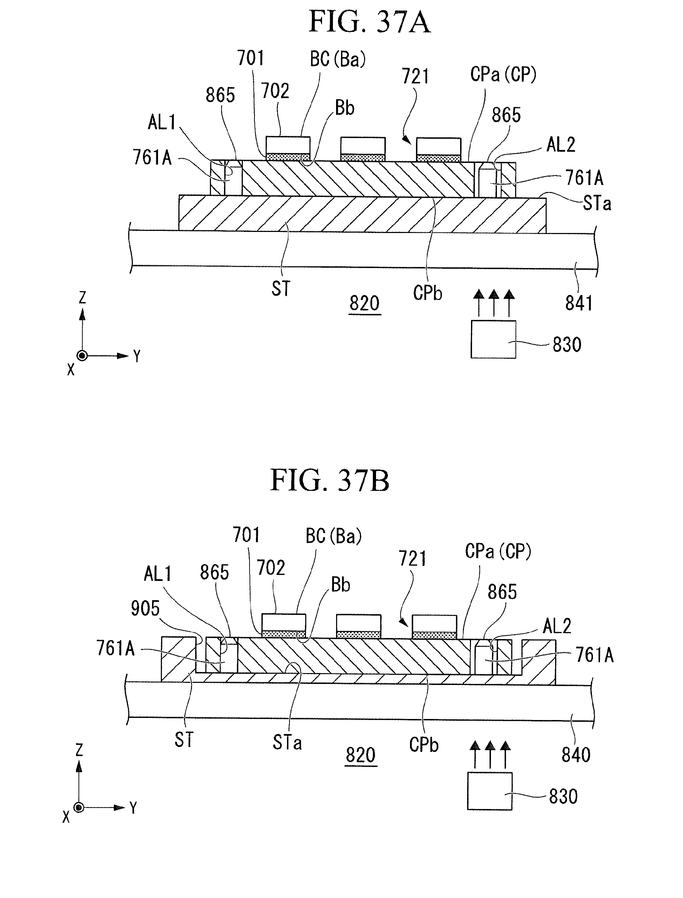

In the example illustrated in Fig. 37A, the top surface serving as the support surface STa of the stage ST is substantially flat. The plate CP is mounted on the top surface (STa) of the stage ST. The top surface (front surface CPa) of the plate CP is substantially flat. The biochip BC is mounted on the top surface of the plate CP. The alignment pins 761 A are formed to protrude upward from the top surface of the stage ST. The top faces 865 of the alignment pins 761A and the top surface (CPa) of the plate CP are substantially coplanar with each other. That is, the height position (position in the Z direction) of the top faces 865 of the alignment pins 761 A is substantially the same as the height position of the surface (CPa, chip-mounting surface, mounting surface) on which the biochip BC is mounted in the plate CP. On the top surface (CPa) of the plate CP, a groove (recess, concave portion, see Fig. 7) in which the adhesive 701 is arranged may be formed in the support area 721 which is the mounting position of the biochip BC.

In the example illustrated in Fig. 37B, a concave portion 905 is formed on the top surface of the stage ST. The bottom surface of the concave portion 905 serving as a support surface STa is substantially flat. The plate CP is mounted on the bottom surface (STa) of the concave portion 905 in the stage ST. The top surface (CPa) of the plate CP is substantially flat. The biochip BC is mounted on the top surface (CPa) of the plate

CP. The alignment pins 761A are formed to protrude upward from the bottom surface (STa) of the concave portion 905 in the stage ST. The top faces 865 of the alignment pins 761A and the top surface (CPa) of the plate CP are substantially coplanar with each other. That is, the height position (position in the Z direction) of the top faces 865 of the alignment pins 761A is substantially the same as the height position of the surface (CPa, chip-mounting surface, mounting surface) on which the biochip BC is mounted in the plate CP. The top surface (CPa) of the plate CP and the top surface of the stage ST may be disposed on substantially the same plane or may be disposed on different planes. On the top surface (CPa) of the plate CP, a groove (recess, concave portion, see Fig. 7) in which the adhesive 701 is arranged may be formed in the support area 721 which is the mounting position of the biochip BC.

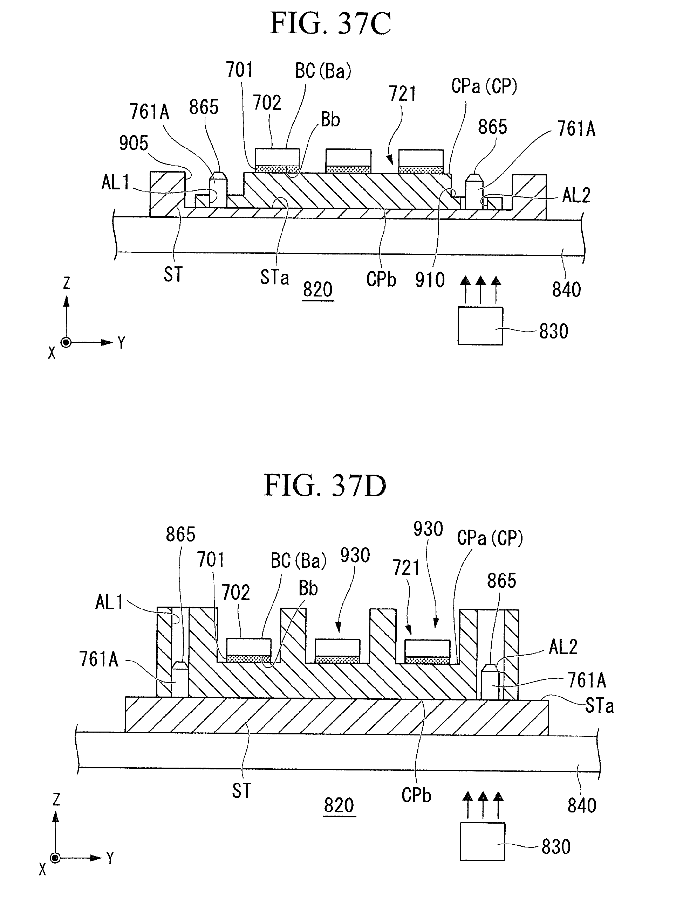

In the example illustrated in Fig. 37C, a concave portion 905 is formed on the top surface of the stage ST. The bottom surface of the concave portion 905 serving as a support surface STa is substantially flat. The plate CP is mounted on the bottom surface (STa) of the concave portion 905 in the stage ST. The plate CP includes a flange portion 910. The flange portion 910 has a height (thickness) lower than that of other parts. For example, the thickness of the flange portion 910 is less than the thickness between the front surface CPa and the rear surface CPb of the plate CP. The flange portion 910 is provided with the first holes AL1 and AL2 for the alignment pins 761A. The top surface (CPa) of the plate CP is substantially flat. The biochip BC is mounted on the top surface (CPa) of the plate CP. The alignment pins 761A are formed to protrude upward from the bottom surface (STa) of the concave portion 905 in the stage ST. The top faces 865 of the alignment pins 761A and the top surface (CPa) of the plate CP are substantially coplanar with each other. That is, the height position (position in the Z direction) of the top faces 865 of the alignment pins 761A is substantially equal to the height position of the surface (CPa, chip-mounting surface, mounting surface) on which the biochip BC is mounted in the plate CP. Parts of the alignment pins 761 are disposed in the first holes AL1 and AL2 and other parts thereof protrude from the first holes AL1 and AL2. The top surface (CPa) of the plate CP and the top surface of the stage ST may be disposed on substantially the same plane or may be disposed on different planes. On the top surface (CPa) of the plate CP, a groove (recess, concave portion, see Fig. 7) in which the adhesive 701 is arranged may be formed in the support area 721 which is the mounting position of the biochip BC.

In the example illustrated in Fig. 37D, the top surface serving as the support surface STa of the stage ST is substantially flat. The plate CP is mounted on the top surface (STa) of the stage ST. A plurality of concave portions 930 are formed on the top surface of the plate CP. The bottom surfaces (CPa) of the concave portions 930 in the plate CP are substantially flat. The biochips BC are mounted on the bottom surfaces (CPa) of the concave portions 930 in the plate CP. The top surface of the plate CP is provided with first holes AL1 and AL2 for the alignment pins 761A. The alignment pins 761 A are formed to protrude upward from the top surface (STa) of the stage ST. The top faces 865 of the alignment pins 761A and the bottom surfaces (CPa) of the concave portions 930 in the plate CP are substantially coplanar with each other. That is, the height position (position in the Z direction) of the top faces 865 of the alignment pins 761A is substantially the same as the height position of the surface (CPa, chip-mounting surface, mounting surface) on which the biochip BC is mounted in the plate CP. The alignment pins 761A are located in the first holes AL1 and AL2. On the bottom surfaces (CPa) of the concave portions 930 in the plate CP, a groove (recess, concave portion, see Fig. 7) in which the adhesive 701 is arranged may be formed in the support area 721 which is the mounting position of the biochip BC.

As described above, by detecting the position and/or posture of the biochip BC before mounting the biochip BC on the plate CP, the biochip BC can be mounted on the plate CP with high positioning accuracy.

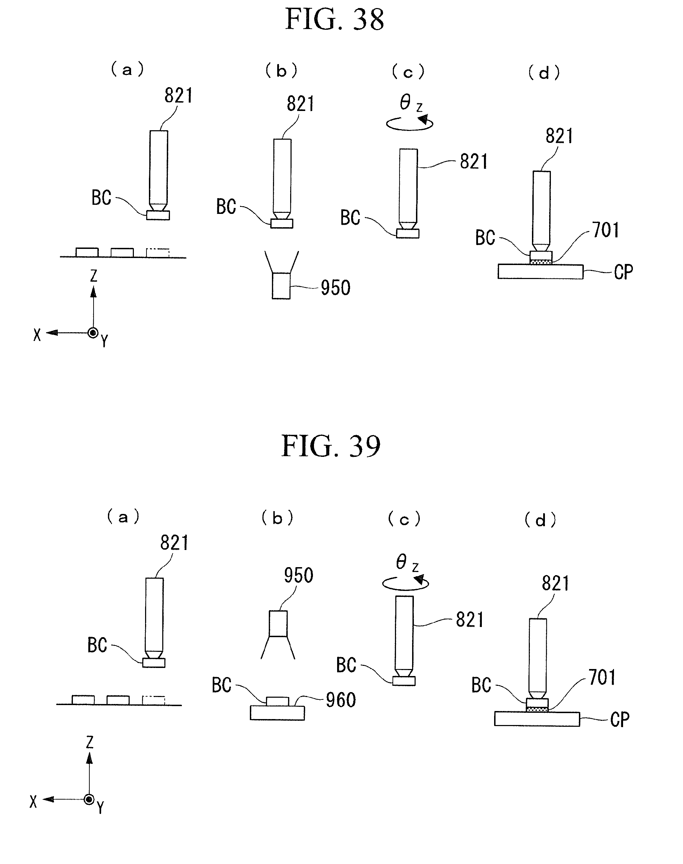

Fig. 38 is a diagram schematically illustrating an example of a procedure of detecting the position/posture of a biochip BC. In Fig. 38(a), the manipulator 821 suctions and supports a biochip BC. For example, the biochip BC may be a biochip that was just cut through dicing, a biochip that was diced a predetermined time ago, or a biochip that as subjected to a predetermined process after dicing. The manipulator 821 is driven by a drive device DV3 (see Fig. 19) which is controlled by the control unit CONT (see Fig. 19). In Fig. 38(b), an image of the biochip BC is captured by an imaging device 950 (a camera, an imaging sensor). In Fig. 38(c), the posture of the biochip BC (for example, a position in the θZ direction, that is, a rotational position of the biochip BC, θZ: the direction of rotation about an axis parallel to the Z axis) is corrected using the manipulator 821 based on imaging data (for example, profile information or edge information of the biochip BC) from the imaging device 950. In Fig. 38(d), the biochip BC in the corrected posture can be mounted on the plate CP.

In the example illustrated in Fig. 38, an image of the biochip BC is captured by the imaging device 950 in a state in which the biochip BC is held by the manipulator 821. When the image is captured, the biochip BC is disposed above the imaging device 950. That is, the imaging device 950 is configured to image the biochip BC from below.

Fig. 39 is a diagram schematically illustrating another example of a procedure of detecting the position/posture of a biochip BC. In Fig. 39(a), the manipulator 821 suctions and holds a biochip BC cut by dicing. In Fig. 38(b), the manipulator 821 moves the biochip BC to a predetermined intermediate position (a relay table 960). The biochip BC is temporarily disposed on the relay table 960. An image of the biochip BC is captured by the imaging device 950 (a camera, an imaging sensor). In Fig. 39(c), the posture of the biochip BC (for example, a position in the θZ direction, that is, a rotational position of the biochip BC, θZ: the direction of rotation about an axis parallel to the Z axis) is corrected using the manipulator 821 based on imaging data (for example, profile information or edge information of the biochip BC) from the imaging device 950. In Fig. 39(d), the biochip BC in the corrected posture can be mounted on the plate CP.

In the example illustrated in Fig. 39, an image of the biochip BC is captured by the imaging device 950 in a state in which the biochip BC is mounted on the relay table 960. When the image is captured, the biochip BC is disposed below the imaging device 950. That is, the imaging device 950 is configured to image the biochip BC from above.

In Figs. 38 and 39, it is preferable that the adhesive (photocurable adhesive) 701 not be denatured by light from the imaging device 950. For example, a shielding member (not illustrated) may be added such that light from the imaging device 950 does not substantially reach the adhesive 701. Alternatively, light reaching the adhesive 701 may have a wavelength (a wavelength or a wavelength band in which the photocurable adhesive is not hardened) at which the adhesive 701 is not substantially denatured. For example, setting of a wavelength band of a light source and/or wavelength control in an optical system can be employed.

In posture control (θZ position control) of the biochip BC, the line (central line) passing through two alignment pins 761A (see Fig. 33 or the like) or 761 (see Fig. 16 or the like) separated on the stage ST can be used as a reference line. For example, a degree of correction of the position in the θZ direction can be calculated based on the reference line which is calculated from the captured image of the alignment pins 761A (761) and an axis line of the biochip BC which is calculated from the captured image of the biochip BC.

The substrate fixing method when the position/posture of the biochip BC is controlled using the imaging device 950 can include, for example, the following steps: (1) preparing the plate CP on the stage ST; (2) generating the reference line based on the captured image of the alignment pins 761 A (761); (3) applying the adhesive 701 onto the support area 721 of the plate CP; (4) picking up the biochip BC; (5) correcting the posture (θZ position) of the biochip BC; (6) mounting the biochip BC on the support area 721 of the plate CP; and (7) hardening the adhesive 701 by irradiation with light.

At least one of the above-mentioned steps can be performed for each biochip BC (or each support area 721) as a single body. Alternatively, at least one of the above-mentioned steps may be simultaneously performed for each of multiple biochips BC (or each of multiple support areas 721), or may be simultaneously performed on all the biochips BC (or all the support areas 721) of one plate CP.

For example, after the biochip BC is separated from the manipulator 821, the adhesive 701 between the biochip BC mounted on the plate CP and the plate CP can be hardened by irradiation with light. Alternatively, in a state in which the biochip BC is held by the manipulator 821, the adhesive 701 between the biochip BC and the plate CP can be hardened by irradiation with light. That is, the adhesive 701 can be hardened by irradiation with light in a state in which the adhesive 701 is interposed between the biochip BC held by the manipulator 821 and the plate CP.

For example, through one operation, the adhesive 701 can be applied to one mounting position (one support area 21). That is, the adhesive 701 can be sequentially arranged at a plurality of mounting positions of the biochips BC on the plate CP. Alternatively, through one operation, the adhesive 701 can be applied to a plurality of mounting positions (a plurality of support areas 21). That is, the adhesive 701 can be substantially simultaneously arranged at a plurality of mounting positions (a plurality of support areas 21) of the biochips BC. Alternatively, the adhesive 701 can be substantially simultaneously arranged at all the mounting positions (all the support areas 21) on the plate CP. When the adhesive 701 is applied to a plurality of mounting positions, a single transfer pin (supplier 111, transferrer) may be used or a plurality of transfer pins may be substantially simultaneously used.

For example, through one operation, the biochip BC can be applied to one mounting position (one support area 21). That is, the biochip BC can be sequentially arranged at a plurality of mounting positions of the biochips BC on the plate CP. Alternatively, through one operation, the biochip BC can be applied to a plurality of mounting positions (a plurality of support areas 21). That is, the biochips BC can be substantially simultaneously arranged at a plurality of mounting positions (a plurality of support areas 21) of the biochips BC. Alternatively, the biochips BC can be substantially simultaneously arranged at all the mounting positions (all the support areas 21) on the plate CP. The operation of applying the adhesive 701 and the operation of mounting the biochip BC may have different steps. For example, after the adhesive 701 is simultaneously arranged at a plurality of mounting positions (support areas 21) on the plate CP, the biochips BC can be mounted on the plate CP one by one.

For example, the adhesive 701 of each of a plurality of biochips BC mounted on the plate CP can be irradiated with light. Alternatively, the adhesive 701 of a plurality of biochips BC can be simultaneously irradiated with light or the adhesive 701 of all the biochips BC on the plate CP can be simultaneously irradiated with light.

For example, a fiber light source or a surface light source can be used as the irradiation unit (light source) for emitting light. Additionally and/or alternatively, the plate CP may be provided with a light guide. For example, one irradiation unit or a plurality of irradiation units can be prepared for a single plate CP. For example, a plurality of irradiation units having different types can be prepared for a single plate CP. For example, the biochips BC (the adhesive 701) can be irradiated with light in multiple steps. For example, the fixing operation based on irradiation with light can include at least two light irradiation steps (a temporary fixing step and a main fixing step).

For example, at least a part of the plate CP can be formed of a transmissive material transmitting light from the irradiation unit 830. Alternatively, the plate CP can be formed of a non-transmissive material. The plate CP formed of a non-transmissive material is provided with, for example, an optical fiber and/or a light guide. Alternatively, the biochip BC may be fixed to the plate CP using a method other than the irradiation with light.

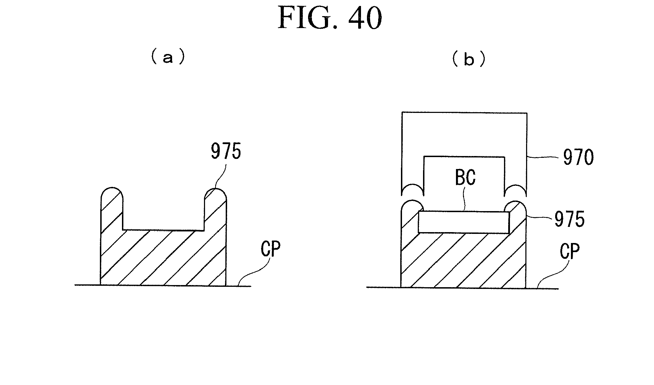

Fig. 40 is a diagram schematically illustrating an example of a method of fixing a biochip using ultrasonic waves. In Fig. 40, ultrasonic waves from a vibration source (not illustrated) are transmitted to a support portion 975 on the plate CP via a horn 970. Examples of the support portion 975 include thermoplastic resins such as acryl, polypropylene, polyethylene, and polycarbonate. For example, the support portion 975 is softened and deformed by ultrasonic vibration and pressure. A part of the softened support portion 975 can cover a part (edge) of the biochip BC. The support portion 975 is hardened when the horn 970 is separated from the support portion 975. The biochip BC is fixed by the deformed support portion 975.

While exemplary embodiments of the present invention have been described above with reference to the accompanying drawings, the present invention is not limited to the embodiments. The shapes, the combinations, and the like of the constituent members described in the above-mentioned embodiments are only examples and can be modified in various forms based on design requirements or the like without departing from the gist of the present invention.

For example, the substrate fixing device according to the above-mentioned embodiments is configured to supply the photocurable adhesive 701 to the base member (the plate CP, the body section 705, and the cube M2), but is not limited to this configuration and may be configured to supply the photocurable adhesive to the biochip BC. The screening device SC according to the above-mentioned embodiments is configured to carry the base members such as the plate CP, the body section 705, and the cube M2 using the stage ST connected in an in-line manner to the mounting device MT, the dispensing device 851, and the measuring device 852, but is not limited to this configuration and may be configured to carry the base members using carrying devices which are individually disposed between the devices.

The mounting device M according to the above-mentioned embodiments, the UV-curable adhesive is exemplified as the photocurable adhesive, but the present invention is not limited to this configuration and an adhesive which is hardened with light of another wavelength band may be used. In the above-mentioned embodiments, the light for hardening the photocurable adhesive 701 and the light for peeling off the dicing film 826 have different wavelength bands, but light of the same wavelength band may be used. In this case, the substrate fixing device may be provided with a single light source and may be configured to distribute light, for example, using optical fibers. The dicing device according to this embodiment may be configured to feed a silicon wafer W which has been diced in advance to the substrate fixing device and the like. The plate CP in this embodiment has a flat panel shape, but may be formed as a well plate including plural grooves (wells) and in which biochips BC are fixed to support areas of the grooves. In this case, at least the grooves or the support areas of the well plate in which the biochips BC are arranged are formed of a member (for example, a glass member or a resin) capable of transmitting curing light.

In an embodiment, a biochip fixing method includes: arranging a biochip (a substrate, a biochip substrate) on an object (a support device M, a support plate, a holder) with a predetermined material (a film, a support film, a support substrate, a resin material, an adhesive layer, an adhesive (for example, a photocurable adhesive)) interposed therebetween; and irradiating the predetermined material with energy waves via the object to fix the biochip to the object.

In an embodiment, a biochip fixing device includes an irradiation unit (irradiation device 270,370) that irradiates a predetermined material (a film, a support film, a support substrate, a resin material, an adhesive layer, an adhesive (for example, a photocurable adhesive)) arranged between a biochip (a substrate, a biochip substrate) and an object (a support device M, a support plate, a holder) with energy waves via the object.

In the method and device, the irradiating with the energy waves may include at least one of (1) softening the predetermined material with the energy waves and (2) hardening the predetermined material with the energy waves.

In the method and device, the energy waves may be incident on the object from a side of the object opposite to the side on which the biochip is arranged.

In the method and device, the biochip may include a first surface (substrate surface, detection surface) on which biomolecules are arranged and a second surface (substrate surface, bonding surface) opposite to the first surface, the biochip may be arranged on the object with at least the predetermined material interposed therebetween in a state in which the second surface of the biochip faces a predetermined surface (support surface Ma, mounting surface, emission surface) of the object, and the energy waves may travel to the second surface of the biochip via the object. Alternatively, the irradiation unit may be configured to cause the energy waves to travel to the second surface in a state in which the second surface of the biochip faces a predetermined surface of the object with at least the predetermined material interposed therebetween in irradiation with the energy waves.

In the method and device, at least a part of the object may have transmissivity to the energy waves.

In the method and device, the object may include an optical path of the energy waves.

In the method and device, the energy waves may include at least one of UV light, laser light, and ultrasonic waves.

In the method and device, at least one of (1) arranging the predetermined material on the biochip and (2) arranging the predetermined material on the object before the arranging of the biochip may be further included.

In the method and device, the predetermined material may be a photocurable adhesive.

In the method and device, the predetermined surface of the object may have a groove portion on which the predetermined material is arranged.

In the method and device, aligning the biochip with the object in a state in which the second surface of the biochip is placed on the object with the predetermined material interposed therebetween may be further included before the irradiating with the energy beams.

According to another embodiment, a substrate fixing method includes: a cutting step of cutting a stacked body including a substrate having a first surface and a second surface, a plurality of biomolecules arranged on the first surface, and an adhesive layer arranged on the second surface in a state in which the adhesive layer is interposed between the substrate and a support member; a removing step of removing the support member from the stacked body; and a fixing step of bonding the adhesive layer of the stacked body to an object.

In the fixing method, the cutting step may include cutting the stacked body according to sections on the first surface including the sections including the biomolecules.

The fixing method may further include a preparation step of arranging the support member on a predetermined surface of the adhesive layer.

The fixing method may further include a support step of supporting the substrate by suctioning the first surface.

In the fixing method, the stacked body may include a protective layer that is disposed on the adhesive layer and that can be peeled off from the adhesive layer, and the fixing method may further include a peeling step of peeling the protective layer from the adhesive layer of the stacked body before the fixing step.

In the fixing method, at least a part of a contact portion of the support member that comes in contact with the protective layer may contain a material in which a supporting force between the support member and the protective layer decreases by irradiation with light, and the fixing method may further include irradiating the contact portion with the light before the removing step.

In the fixing method, the adhesive layer may include a first adhesive layer that is bonded to the second surface, a second adhesive layer that is bonded to the protective layer, and a support substrate that is interposed between the first adhesive layer and the second adhesive layer and that supports the first adhesive layer and the second adhesive layer.

In the fixing method, the adhesive layer may be formed of a material that is softened to be bondable by a predetermined process and the fixing step may include softening and bonding the adhesive layer to the object (plate, base member) by performing the predetermined process on the adhesive layer of the stacked body.

In the fixing method, the predetermined process may include irradiating the adhesive layer with energy waves to melt the adhesive layer.

In the fixing method, the fixing step may include irradiating the adhesive layer with the energy waves through the object.

A surface of at least one of the adhesive layer and the object may be provided with a protruding portion and the fixing step may include irradiating the protruding portion with the energy waves.

In the fixing method, the adhesive layer and the object may be formed of a resin material.

There is provided a fixing method including: a cutting step of cutting a stacked body including a substrate having a first surface and a second surface and a plurality of biomolecules arranged on the first surface in a state in which a support member is brought into contact with the second surface of the stacked body to support the stacked body; a removing step of removing the support member from the stacked body; and a fixing step of bonding the second surface of the substrate of the stacked body to an object, wherein the object includes a groove portion in a bonding area to which the second surface is bonded and wherein the fixing step includes dispensing a material which is hardened by performing a predetermined process to the groove portion to be coplanar with the surface of the object, bringing the second surface into contact with the bonding area in a state in which the material is dispensed, and fixing the second surface to the object by performing the predetermined process on the material to harden the material in a state in which the second surface is brought into contact with the bonding area.

In the fixing method, the predetermined process may include irradiating the material with predetermined light, the object may be formed of a material transmitting the predetermined light, and the fixing step may include irradiating the material with the predetermined light through the object.

In the fixing method, the cutting step may include cutting the stacked body according to sections on the first surface including the sections including the biomolecules.

There is provided a fixing method including: a first step of forming sections including a plurality of biomolecules on a first surface of a substrate having the first surface and a second surface; a second step of bonding an adhesive layer having an adhesivity on at least a surface bonded to the second surface to the second surface of the substrate to form a stacked body; a third step of arranging a support member on the adhesive layer of the stacked body or arranging the support member on the first surface including the plurality of biomolecules; and a fourth step of cutting the stacked body according to the sections.

According to an embodiment, there is provided a biomolecule array screening method including: the above-mentioned substrate fixing method; a dispensing step of dispensing a sample including a target, which is able to specifically react with biomolecules, to the object; and a detection step of detecting an affinity of the target and the biomolecules.

According to an embodiment, there is provided a substrate fixing device that fixes a biochip having a first surface on which a plurality of biomolecules are arranged to a support area of a base member, including: a supply unit that supplies a photocurable adhesive to the biochip or the support area; a transfer unit that arranges the biochip in the support area; a stage that includes a transmissive area transmitting light for hardening the photocurable adhesive to correspond to at least a part of an arrangement surface on which the base member is arranged and that is able to support the base member; and an irradiation unit that irradiates at least a part of the arrangement surface with light.

In the substrate fixing device, the irradiation unit may apply the light from below the stage.

In the substrate fixing device, the stage may be movable relative to the irradiation unit.

In the substrate fixing device, the supply unit may include a storage tank that stores the photocurable adhesive.

In the substrate fixing device, the supply unit may include an ejection head that ejects a fluid including the photocurable adhesive stored in the storage tank as droplets.

In the substrate fixing device, the supply unit may include a transferrer that transfers the fluid including the photocurable adhesive stored in the storage tank to the biochip or the support area.

In the substrate fixing device, the irradiation unit may apply the light from an end surface of the base member opposite to the surface of the support area.

In the substrate fixing device, the irradiation unit may include an irradiation area of the light having a size corresponding to the transmissive area.

In the substrate fixing device, the irradiation unit may include an irradiation area of the light having a line shape extending in a first direction along the transmissive area and the stage may be movable relative to the irradiation unit in a second direction crossing the first direction.

The substrate fixing device may further include a guide portion that guides movement of the stage in a predetermined direction and an adjustment member that adjusts the base member to a predetermined position in a third direction perpendicular to the first surface and that is supported by the stage.

In the substrate fixing device, the adjustment member may include a first support portion that is supported by the stage and a second support portion that is separated by the first support portion by a distance at which the biomolecule is located at the predetermined position in the third direction, that is supported by the first support portion, and that supports the substrate.

According to an embodiment, there is provided a substrate fixing device that fixes a biochip having a first surface on which a plurality of biomolecules are formed to a support area of a base member, including: a supply unit that supplies a photocurable adhesive to the biochip or the support area; a transfer unit that arranges the biochip in the support area; a stage that includes a transmissive area transmitting light for hardening the photocurable adhesive and that is able to support the base member; and an irradiation unit that irradiates the transmissive area of the stage with light.

In the fixing device, the stage may include an alignment portion that aligns the base member, and the alignment portion may include a fitting portion that is fitted into a hole formed in the base member and an index portion that is disposed at a first position which is coplanar with the first surface when the base member is supported by the stage and that serves as an index of position information of the biomolecules in the base member.

In the fixing device, the alignment portion may include an index surface that is disposed at the first position and that has a diameter smaller than that of the hole and the index portion may be a profile portion of the index surface.

In the fixing device, the alignment portion may include an index surface that is disposed at the first position and that has a diameter smaller than that of the hole and the index portion may be a mark formed on the index surface.

According to an embodiment, there is provided a mounting device including: the above-mentioned substrate fixing device; and a feed device that feeds a biochip to the substrate fixing device.

In the mounting device, the feed device may include a dicing device that dices a wafer on which a plurality of biochips are collectively arranged into individual biochips.

In the mounting device, the dicing device may include a sheet support portion that supports a support sheet bonded to the surface of the biochip on which biomolecules are arranged.

The mounting device may further include a second irradiation unit that irradiates an area in which the support sheet is arranged with second light.

According to an embodiment, there is provided a substrate fixing method of fixing a biochip, which has a first surface and a second surface and in which a plurality of biomolecules are arranged on the first surface, to a support area of a base member, including: a supply step of supplying an adhesive, which is hardened by irradiation with light, to the second surface of the biochip or the support area; a transfer step of arranging the biochip in the support area to bring the support area and the second surface into contact with each other with the adhesive interposed therebetween; and an irradiation step of irradiating the second surface of the biochip arranged in the support area with light.

In the substrate fixing method, the irradiation step may include irradiating the second surface with the light via the base member of which at least a part transmits the light.

In the substrate fixing method, the irradiation step may include irradiating the second surface with the light through an optical path of the base member.

In the substrate fixing method, the base member may include a plurality of support areas and the irradiation step may include simultaneously irradiating an area covering the plurality of support areas with the light.

In the substrate fixing method, the irradiation step may include irradiating the base member with the light having a line shape extending in a first direction intersecting a predetermined direction while moving the base member in the predetermined direction relative to the light.

In the substrate fixing method, the supply step, the transfer step, and the irradiation step may be performed while the base member is moved in a predetermined direction.

The substrate fixing method may further include a second irradiation step of irradiating the second surface with light to temporarily fix the biochip to the support area between the transfer step and the irradiation step.

The substrate fixing method may further include: a step of providing a stage supporting the base member with an alignment portion having a fitting portion that is fitted into a hole formed in the base member and an index portion that is disposed at a first position which is coplanar with the first surface when the base member is supported by the stage and that serves as an index of position information of the biomolecules on the base member; a step of fitting the fitting portion into the hole of the base member to align the base member with the stage; a step of measuring the index portion; and a step of acquiring position information of the biomolecules in the base member based on the measurement result of the index portion.

In the substrate fixing method, the step of measuring the index portion may include measuring a profile of an index surface that is disposed at the first position and that has a diameter smaller than that of the hole.

In the substrate fixing method, the step of measuring the index portion may include measuring a mark formed on an index surface that is disposed at the first position and that has a diameter smaller than that of the hole.

According to an embodiment, there is provided a mounting method including: a substrate feeding step of feeding a biochip having a first surface on which a plurality of biomolecules are arranged and a step of fixing the fed biochip to a base member using the above-mentioned substrate fixing method.

In the mounting method, the substrate feeding step may include a dicing step of dicing a wafer on which a plurality of biochips are collectively arranged into individual biochips.

In the mounting method, the dicing step may include dicing the wafer while supporting a support sheet bonded to the surface of the biochip on which the biomolecules are arranged.

According to an embodiment, there is provided a biochip-mounted base member manufacturing method including: the above-mentioned substrate fixing method; and a sealing step of sealing a base member to which a biochip is bonded using the substrate fixing method.

### DESCRIPTION OF THE REFERENCE SYMBOLS

- M, M1, M2: support device
- Ma: support surface
- D: section
- UW: energy waves
- L: light
- Mb: groove portion
- Md: protrusion
- Mc: concave portion
- 10: chip
- 10a, 110a: first surface
- 10b, 110b: second surface
- 20: biomolecule portion
- 30, 34, 35, 233, 360: adhesive portion
- 31: first adhesive material
- 32: second adhesive material
- 33: support base
- 36, 41, 50: unit stacked body
- 40: protective portion
- 100, 200, 300: substrate fixing structure
- 110: silicon wafer
- 120: biomolecule portion pattern
- 130, 230: adhesive sheet
- 131: first adhesive layer
- 132: second adhesive layer
- 133, 234: support film
- 140: protective sheet
- 150, 240, 330: stacked body
- 160: dicing tape
- 170, 260, 375: cutting surface
- 180: suction pipe
- 200: substrate fixing structure
- 231: adhesive material
- 232: fusion material
- 234a: protrusion
- 260: cutting surface
- 270: energy wave irradiation device
- 350: adhesive
- 350a: front surface
- 701: adhesive
- 705: body section (base member)
- 721: support area
- 761, 761A: alignment pin (alignment portion)
- 810: supply unit
- 812: storage tank
- 820: transfer unit
- 825: dicing device (feed device)
- 826: dicing film (support sheet)
- 827: guide member (sheet support portion)
- 370, 830: irradiation unit
- 840: carrying unit
- 841: rail (guide portion)
- 842: carrier (adjustment member)
- 862: fitting portion
- AL1: first hole (alignment portion, hole)
- AL2: second hole (alignment portion, hole)
- Ba: first surface (front surface)
- Bb: second surface (rear surface)
- BC: biochip (substrate)
- CP: plate (base member)
- FM1, FM2: mark
- M2: cube (base member)
- MT: mounting device
- W: silicon wafer (wafer)

## Claims

1. A biochip fixing method comprising:
arranging a biochip on an object with a predetermined material interposed therebetween; and
irradiating the predetermined material with energy waves via the object to fix the biochip to the object.

2. The biochip fixing method according to claim 1, wherein the irradiating with the energy waves includes at least one of (1) softening the predetermined material with the energy waves and (2) hardening the predetermined material with the energy waves.

3. The biochip fixing method according to claim 1 or 2, wherein the biochip includes a first surface on which biomolecules are arranged and a second surface opposite to the first surface,
wherein the biochip is arranged on the object with at least the predetermined material interposed therebetween in a state in which the second surface of the biochip faces a predetermined surface of the object, and
wherein the energy waves travel to the second surface of the biochip via the object.

4. The biochip fixing method according to any one of claims 1 to 3, wherein the energy waves are incident on the object from a side of the object opposite to the side on which the biochip is arranged.

5. The biochip fixing method according to any one of claims 1 to 4, wherein at least a part of the object has transmissivity to the energy waves.

6. The biochip fixing method according to any one of claims 1 to 5, wherein the object includes an optical path of the energy waves.

7. The biochip fixing method according to any one of claims 1 to 6, wherein the energy waves include at least one of UV light, laser light, and ultrasonic waves.

8. The biochip fixing method according to any one of claims 1 to 7, further comprising at least one of (1) arranging the predetermined material on the biochip and (2) arranging the predetermined material on the object before the arranging of the biochip.

9. The biochip fixing method according to any one of claims 1 to 8, wherein the predetermined material is a photocurable adhesive.

10. The biochip fixing method according to any one of claims 4 to 9, wherein the predetermined surface of the object has a groove portion on which the predetermined material is arranged.

11. The biochip fixing method according to any one of claims 4 to 10, further comprising aligning the biochip with the object in a state in which the second surface of the biochip is placed on the object with the predetermined material interposed therebetween before the irradiating with the energy beams.

12. A biomolecule array screening method comprising:
fixing a biochip to an object using the biochip fixing method according to any one of claims 1 to 11;
dispensing a sample including a target, which is able to specifically react with biomolecules, to the object; and
detecting an affinity of the target and the biomolecules.

13. A biochip fixing device comprising:
an irradiation unit that irradiates a predetermined material, which is arranged between a biochip and an object, with energy waves via the object.

14. The biochip fixing device according to claim 13, wherein the predetermined material includes at least one of (1) a material which is softened by irradiation with the energy waves and (2) a material which is hardened by irradiation with the energy waves.

15. The biochip fixing device according to claim 13 or 14, wherein the biochip includes a first surface on which biomolecules are arranged and a second surface opposite to the first surface,
wherein the second surface of the biochip faces a predetermined surface of the object with at least the predetermined material interposed therebetween at the time of irradiation with the energy waves, and
wherein the irradiation unit is configured to cause the energy waves to travel to the second surface of the biochip via the object.

16. The biochip fixing device according to any one of claims 13 to 15, wherein the irradiation unit is disposed on a side of the object opposite to the side on which the biochip is arranged.

17. The biochip fixing device according to any one of claims 13 to 16, wherein at least a part of the object has transmissivity to the energy waves.

18. The biochip fixing device according to any one of claims 13 to 17, wherein the object includes an optical path of the energy waves.

19. The biochip fixing device according to any one of claims 13 to 18, wherein the energy waves include at least one of UV light, laser light, and ultrasonic waves.

20. The biochip fixing device according to any one of claims 13 to 19, further comprising arrangement unit configured to (1) arrange the predetermined material on the biochip or to (2) arrange the predetermined material on the object before the biochip is arranged on the object.

21. The biochip fixing device according to any one of claims 13 to 20, wherein the predetermined material is a photocurable adhesive.

22. The biochip fixing device according to any one of claims 16 to 21, wherein the predetermined surface of the object has a groove portion in which the predetermined material is arranged.

23. The biochip fixing device according to any one of claims 16 to 22, further comprising alignment unit configured to align the biochip with the object in a state in which the second surface of the biochip is placed on the object with the predetermined material interposed therebetween before the irradiating with the energy beams.
